# EUROPÄISCHE PATENTSCHRIFT

(11) **EP 3 749 248 B1**
(45) Veröffentlichungstag und Bekanntmachung des Hinweises auf die Patenterteilung: **07.12.2022**
(21) Anmeldenummer: 18762505.8
(22) Anmeldetag: 30.08.2018
(51) Int. Cl.: A61C 8/00, A61C 13/01, A61C 1/08

(54) **VERBESSERTE FIXIERSTIFTHALTERUNG FÜR ZAHNPROTHESEN UND VERFAHREN ZUR HERSTELLUNG**
IMPROVED FIXATION PIN SLEEVE FOR DENTAL PROSTHESES AND PRODUCTION METHOD
DOUILLE AMÉLIORÉE POUR TIGE DE FIXATION POUR PROTHÈSES DENTAIRES ET PROCÉDÉ DE FABRICATION

(30) Priorität: 07.02.2018 EP 18155606
(43) Veröffentlichungstag der Anmeldung: 16.12.2020
(73) Patentinhaber: Straumann Holding AG, 4052 Basel (CH)
(72) Erfinder: MARKO, Rebic, 81737 München (DE); MAXIMILIAN, Sattler, 80339 München (DE); SÖREN, Dietz, 85457 Wörth (DE); ERNST, Hudeczek, 85221 Dachau (DE)
(74) Vertreter: Modiano, Gabriella Diana
(86) Internationale Anmeldenummer: PCT/EP2018/073400
(87) Internationale Veröffentlichungsnummer: WO 2019/154531

(56) Entgegenhaltungen:
- WO-A1-2013/004606
- WO-A1-2014/056104
- FR-A1- 2 889 050

## Beschreibung

Die vorliegende Erfindung betrifft eine verbesserte Fixierstifthalterung für Zahnprothesen, um die Zahnprothese im Mund eines Patienten temporär mit Hilfen jeweiliger Fixierstifte im Kiefer verankern zu können und ein Verfahren zur Herstellung solcher Fixierstifthalterungen.

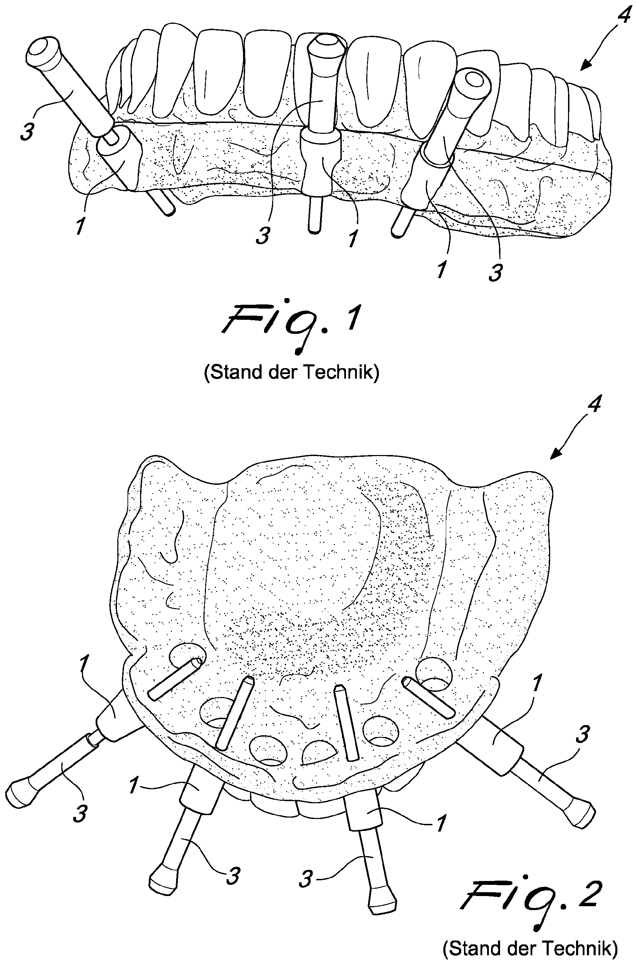

Im Stand der Technik werden Zahnprothesen, wie beispielartig in Fig. 1 und Fig. 2 dargestellt, um diese zu einer Anpassung im Mund des Patienten temporär mit dem Kiefer zu verankern, mit Fixierstifthalterungen versehen, die in der Zahnprothese fest integriert werden und eine Führungsbohrung aufweisen. Durch die jeweilige Führungsbohrung wird dann im Mund des Patienten ein jeweiliger Fixierstift bis in den Kieferknochen hinein vorgeschoben oder hineingeschraubt, um die Zahnprothese temporär mit dem Kiefer zu verankern und dabei die Anpassung beispielsweise von Zahnoberflächen und/oder Ausrichtungen von einzelnen Zahnprothesenteilen entsprechend vornehmen zu können.

Üblicherweise sind die entsprechenden Fixierstifthalterungen mit der Führungsbohrung vorgebohrt ausgebildet, die dann in die Zahnprothese entsprechend eingesetzt oder eingeklebt werden. Die entsprechenden Löcher im Kiefer, in die die Fixierstifte vor der Anpassung eingeschoben oder eingeschraubt werden, sind bevorzugt separat im Kiefer vorbereitet worden.

FR 2 889 050 A1 offenbart ein Zahnimplantat-Analog für die Bearbeitung von Zahnprothesen, bei der durch Führungshülsen Löcher in die Zahnprothese eingebracht werden, gemäß dem Oberbegriff von Anspruch 1.

WO 2013 004 606 A1 offenbart einen Bausatz zu einer Befestigung der Zahnprothese im Mund des Patienten, wobei die Zahnprothese vorgebohrte Fixierstifthalterungen für Fixierstifte aufweist, die durch die Fixierstifthalterungen in den Kieferknochen eingeschoben werden können. Die Präzision einer Platzierung der Zahnprothese im Kieferknochen hängt von einer richtigen Lage und einem Neigungswinkel der vorgebohrten Fixierstifthalterungen ab.

WO 2014 056 104 A1 offenbart eine Schale, die einerseits an die Zahnprothese und über die Zahnprothese überstehend am Kieferknochen angepasst ist. Dabei wird die Schale, die Öffnungen aufweist, durch Fixierstifte mit dem Kieferknochen gegen ein Verrutschen gesichert. Die Zahnprothese wird dabei hauptsächlich durch die Schale, die den Kieferknochen umgebend daran anliegt positioniert.

Oft ist es schwierig, die jeweilige Führungsbohrung in die jeweilige Fixierstifthalterung präzise genug einzubringen, wobei ein Bohrer möglichst präzise und nur entlang der Längsachse der Fixierstifthalterung in die Fixierstifthalterung geführt werden soll. Wenn eine Richtung und Anordnung der Führungsbohrung nicht präzise genug erfolgt, fluchtet später der Fixierstift nicht mit der Bohrung, die schon im Kiefer vorbereitet ist, um den Fixierstift darin aufzunehmen. Deshalb werden auch teilweise schlitzartige Fixierstifthalterungen eingesetzt, für die zunächst nur eine Ausrichtung des Führungsschlitzes präzise vorbestimmt ausgebildet sein muss. In der schlitzartigen Fixierstifthalterung kann das Fixierstift aber nur in einer Dimension gehalten werden, so dass dadurch ein Verlust an präziser Haltesicherheit der Zahnprothese am Kiefer die Folge ist.

Andererseits, wenn gängige hülsenartige Fixierstifthalterungen eingesetzt werden, ist einerseits die Anforderung, dass diese möglichst steif sind, um den Fixierstift möglichst gut und präzise zu führen, andererseits soll die Fixierstifthalterung aber auch nicht zu steif sein, wie beispielsweise aus Metall, damit überstehende Teile davon nach der Anpassung im Mund auch wieder gut abgeschliffen werden können.

Die Aufgabe der Erfindung, um die Nachteile aus dem Stand der Technik zu beseitigen, besteht daher in der Bereitstellung von verbesserten Fixierstifthalterungen für eine Zahnprothese zu einer Fixierung derselben im Mund eines Patienten durch einen jeweiligen Fixierstift, wobei die Führungsbohrungen möglichst präzise und einfach eingebracht werden können und überstehende Teile nach einer Anpassung der Zahnprothese im Mund des Patienten möglichst einfach entfernt werden können sollen. Bevorzugt soll auch ein verbessertes Verfahren zum Herstellen der Zahnprothese mit den Fixierstifthalterungen und zu einem anschließenden Entfernen überstehender Reste, nachdem eine Fixierung und Anpassung im Mund des Patienten vorgenommen ist, bereitgestellt werden.

Die vorstehende Aufgabe wird von einer Vorrichtung und einem Verfahren gemäß den Merkmalen der unabhängigen Ansprüche 1 und 11 und der unabhängigen Ansprüche 23, 24 und 25 und 26 gelöst. Weitere vorteilhafte Ausführungsformen der Erfindung sind in den abhängigen Ansprüchen angegeben.

Erfindungsgemäß wird eine Fixierstifthalterung mit einer dazu passenden Führungshülse (2) für eine Zahnprothese bereitgestellt, wobei die Fixierstifthalterung ausgebildet ist, in der Zahnprothese integrierbar oder darin integriert zu sein, um entlang ihrer Längsachse über einen entsprechenden Fixierstift mit einem Kiefer eines Patienten verbunden werden zu können, der zuvor gebohrte Löcher aufweist, in die der Fixierstift, der durch die Fixierstifthalterung schiebbar ist, hineinragen kann, um die Zahnprothese dadurch mit dem Kiefer temporär zu verankern. Eine erste Ausbildungsform der Fixierstifthalterung umfasst dabei:
- einen Basisabschnitt, der ausgebildet ist, mit der Zahnprothese integral verbindbar zu sein oder der einstückig mit der Zahnprothese ist; und
- einen Außenadapterabschnitt, der integral mit dem Basisabschnitt verbunden ist und sich entlang der Längsachse vom Basisabschnitt aus mit einer Außenadapterlänge zu einem äußeren Ende hin mit einem Außenadapterquerschnitt erstreckt, wobei das äußere Ende des Außenadapterabschnitts an der Zahnprothese nach außen vom Patienten wegweist;
- wobei die Führungshülse entlang einer Führungshülsenlängsachse länglich und hülsenartig mit einem inneren Führungskanal, der beidseitig nach außen offen ist, ausgebildet ist und an einem ersten Ende entlang der Führungshülsenlängsachse einen inneren becherartigen Innenadapterabschnitt mit einer Innenadapterlänge und einem Innenadapterquerschnitt aufweist;
- wobei der Innenadapterabschnitt mit der Innenadapterlänge und dem Innenadapterquerschnitt und der Außenadapterabschnitt mit der Außenadapterlänge und dem Außenadapterquerschnitt so zueinander passend ausgebildet sind, dass sie aufeinander steckbar sind und dabei eine Verbindung bilden, die genügend stabil ist, um mit einer vorbestimmten Toleranz durch die Führungshülse hindurch ein Loch in die Fixierstifthalterung bohren zu können, in das der Fixierstift passt.

Ein wesentlicher Vorteil der neuartigen Fixierstifthalterung besteht darin, dass die Fixierstifthalterung einen Außenadapterabschnitt aufweist, der ausgebildet ist, dass darauf die Führungshülse steckbar ist, um durch den Führungskanal der Führungshülse eine entsprechend präzise Bohrung in der Fixierstifthalterung ausführen, wobei eine Führungsbohrung für den jeweiligen Fixierstift gebildet wird.

Vorteilhafterweise kann dabei die Fixierstifthalterung aus einem weicheren Material als die Führungshülse, wie beispielsweise aus einem Kunststoff sein und die Führungshülse beispielsweise aus einem Metall gefertigt sein. Dabei ermöglicht einerseits die Führungshülse, die dementsprechend härter ist, eine gute Stabilität für eine Führung einer Bohrung der Führungsbohrung in der Fixierstifthalterung. Andererseits, indem die Fixierstifthalterung aus einem weicheren Material als die Führungshülse besteht, können nach einer Anpassung der Zahnprothese im Mund des Patienten seitlich überstehende Außenadapterabschnitte leichter entfernt werden, beispielsweise durch Abfräsen oder Abschleifen. Die Verarbeitung bei der Herstellung der Fixierstifthalterung ist also einfacher und präziser geworden, als im Stand der Technik, und das spätere Entfernen der seitlich überstehenden Teile der Fixierstifthalterung, beispielsweise durch Abfräsen oder Abschleifen, die jetzt die Außenadapterabschnitte sind, ist ebenfalls vereinfacht worden. Eine gewisse Länge der Führungsbohrung muss sowieso sein, damit der Fixierstift sicher und schwenksicher gehalten wird und die Führungsbohrung auch nicht ausbricht.

Dadurch dass die Führungshülse die Fixierstifthalterung entlang der Längsachse verlängert, ist eine wesentlich genauere Führung des Bohrers möglich, um die Führungsbohrung in die Fixierstifthalterung einzubringen.

Bevorzugt kann die Führungshülse nach einem Abziehen von der Fixierstifthalterung auch wieder weiterverwendet werden.

Die Fixierstifthalterung kann gemäß einer erfindungsgemäßen zweiten Ausbildungsform Folgendes umfassen:
- einen Führungsabschnitt, der sich entlang der Längsachse erstreckt und diese allseitig umgibt, wobei der Führungsabschnitt mindestens eine Führungsfläche und eine Führungsabschnittslänge entlang der Längsachse aufweist; und
- einen Basisabschnitt, der integral oder einstückig mit dem Führungsabschnitt verbunden ist und sich außerhalb der Führungsfläche seitlich vom Führungsabschnitt weg erstreckt, wobei der Basisabschnitt mit der Zahnprothese integral verbindbar ist oder einstückig mit der Zahnprothese ist;

wobei die Führungshülse entlang einer Führungshülsenlängsachse länglich und hülsenartig mit einem inneren Führungskanal ausgebildet ist, der beidseitig nach außen offen ist, und in einem Abschnitt entlang der Führungshülsenlängsachse einen inneren, becherartigen Innenadapterabschnitt mit einem Innenadapterquerschnitt und einer Innenadapterlänge aufweist; und
wobei der Innenadapterabschnitt mit der Innenadapterlänge und dem Innenadapterquerschnitt und der Führungsabschnitt mit der Führungsfläche und der Führungsabschnittslänge so zueinander passend ausgebildet sind, dass sie entlang der Längsachse und zugleich der Führungshülsenlängsachse aufeinander rotationsfest steckbar sind und dabei eine Verbindung bilden, um durch die Führungshülse hindurch ein Loch in die Fixierstifthalterung bohren zu können, in das der Fixierstift passt.

Die zweite Ausbildungsform der Fixierstifthalterung mit der dazu passenden Führungshülse hat die gleichen Vorteile, wie die erste Ausführungsform, die darin bestehen, dass der Führungsabschnitt so ausgebildet ist, dass darauf die Führungshülse steckbar ist, um durch den Führungskanal der Führungshülse eine entsprechend präzise Bohrung in der Fixierstifthalterung ausführen, wobei die Führungsbohrung für den Fixierstift gebildet wird.

Vorteilhafterweise kann dabei die Fixierstifthalterung ebenfalls aus einem weicheren Material als die Führungshülse, wie beispielsweise aus einem Kunststoff sein und die Führungshülse beispielsweise aus einem Metall gefertigt sein. Dabei ermöglicht einerseits die Führungshülse, die dementsprechend härter ist, eine gute Stabilität für eine Führung einer Bohrung der Führungsbohrung in der Fixierstifthalterung. Andererseits, indem die Fixierstifthalterung und dabei insbesondere der Führungsabschnitt oder zumindest der Übergang des Führungsabschnitts zum Basisabschnitt aus einem weicheren Material als die Führungshülse besteht, können nach einer Anpassung der Zahnprothese im Mund des Patienten die seitlich überstehenden Außenadapterabschnitte leichter entfernt werden, beispielsweise durch Abfräsen oder Abschleifen.

Weitere bevorzugt Ausführungsformen sind in der detaillierten Beschreibung und in den abhängigen Ansprüchen offenbart.

Die Verfahren zur Herstellung der Zahnprothese mit den Fixierstifthalterungen gemäß Anspruch 23 und Anspruch 25 zeigen auf, dass die Herstellung durch den Einsatz der Fixierstifthalterungen mit den aufsteckbaren Führungshülsen einfacher und präziser geworden ist, als im Stand der Technik.

Bevorzugte Ausführungsformen gemäß der vorliegenden Erfindung sind in nachfolgenden Zeichnungen und in einer detaillierten Beschreibung dargestellt, sie sollen aber die vorliegende Erfindung nicht ausschließlich darauf begrenzen.
Es zeigen
- Fig. 1: eine perspektivische Ansicht von der Seite einer Zahnprothese, in der gemäß dem Stand der Technik drei Fixierstifthalterungen eingebracht sind, in denen jeweilige Fixierstifte stecken; man erkennt darin nach außen abstehende überstehende Endteile der jeweiligen Fixierstifthalterungen;
- Fig. 2: eine perspektivische Ansicht von unten der Zahnprothese nach Fig. 1, in der gemäß dem Stand der Technik die drei Fixierstifthalterungen eingebracht sind, in denen jeweilige Fixierstifte stecken; man erkennt darin die nach innen zum Kiefer hin, der nicht dargestellt ist, überstehenden Fixierstifte;

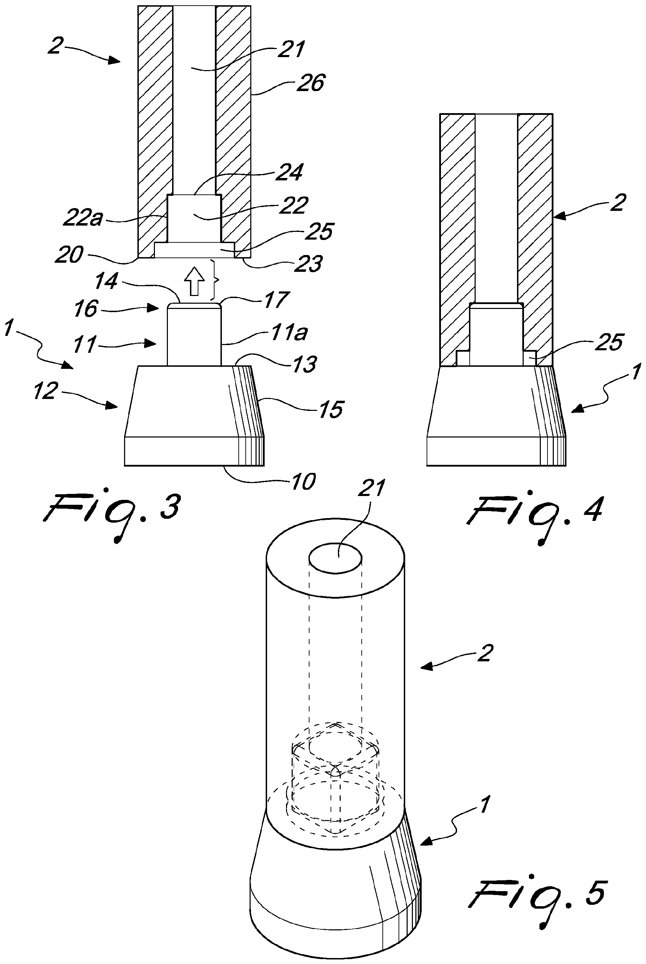

- Fig. 3: eine Seitenschnittansicht einer bevorzugten ersten Ausbildungsform der Fixierstifthalterung einer Führungshülse, die entlang einer gemeinsamen Längsachse direkt über der Fixierstifthalterung aber in einem nichtverbundenen Zustand angeordnet ist, wobei die Fixierstifthalterung einen Innenadapterabschnitt aufweist, der so ausgebildet ist, dass er genau passend auf einen Außenadapterabschnitt der Fixierstifthalterung, der direkt darunter skizziert ist, passt; die Führungshülse weist in einem unteren Endabschnitt des Innenadapterabschnitts eine annulare Aussparung auf, die in Bezug zum dazu passenden Außenadapterabschnitt einen größeren Querschnitt hat;
- Fig. 4: eine Seitenschnittansicht der bevorzugten ersten Ausbildungsform der Fixierstifthalterung und der Führungshülse aus Fig. 3, wobei die Fixierstifthalterung und die Führungshülse nunmehr verbunden sind; angeordnet ist, wobei die Fixierstifthalterung einen Innenadapterabschnitt aufweist, der so ausgebildet ist, dass er genau passend auf einen Außenadapterabschnitt der Fixierstifthalterung, der direkt darunter skizziert ist, passt;
- Fig. 5: eine perspektivische Ansicht der Fixierstifthalterung und der Führungshülse gemäß Fig. 4, die aufeinander gesteckt und damit verbunden sind;
- Fig. 6a: links im Bild eine perspektivische Ansicht und rechts im Bild eine Seitenansicht einer zweiten bevorzugten Fixierstifthalterung mit einem runden Außenadapterquerschnitt;
- Fig. 6b: links im Bild eine perspektivische Ansicht und rechts im Bild eine Seitenansicht einer dritten bevorzugten Fixierstifthalterung mit einem runden Außenadapterquerschnitt;
- Fig. 6c: links im Bild eine perspektivische Ansicht und rechts im Bild eine Seitenansicht einer vierten bevorzugten Fixierstifthalterung mit einem quadratischen Außenadapterquerschnitt und einer abgerundeten Außenadapterstirnkante;
- Fig. 6d: links im Bild eine perspektivische Ansicht und rechts im Bild eine Seitenansicht einer fünften bevorzugten Fixierstifthalterung mit einem hexagonalen Außenadapterquerschnitt;
- Fig. 7: links im Bild eine perspektivische Ansicht und rechts im Bild eine Seitenansicht einer sechsten bevorzugten Fixierstifthalterung mit einem runden Außenadapterquerschnitt und einer oberen zweiten Stirnfläche, die einen Winkel von 55° zur Längsachse hat;

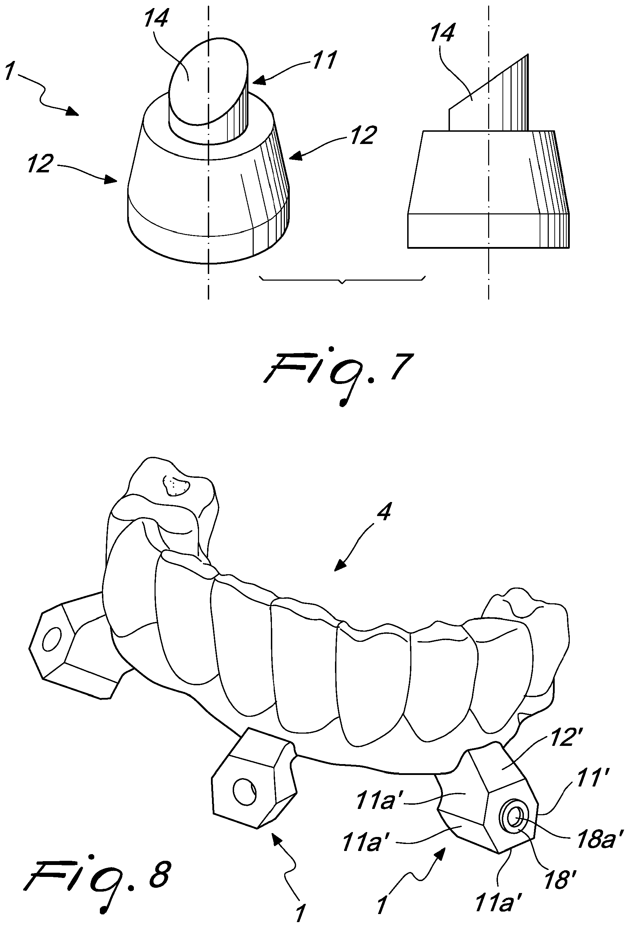

- Fig 8: eine perspektivische Ansicht von der Seite einer anderen Zahnprothese mit einer anderen bevorzugten Ausbildungsform der Fixierstifthalterungen und der Hülse, wobei an der Zahnprothese drei Fixierstifthalterungen mit einer jeweiligen Bohrung entlang einer jeweiligen Längsachse eingebracht sind, und wobei eine vordere rechte Fixierstifthalterung eine zusätzliche erste Buchse aufweist, die eine Lagerung des nicht gezeigten Fixierstifts versteift; es ist darin auch erkennbar, dass ein jeweiliger Führungsabschnitt der jeweiligen Fixierstifthalterung über einen jeweiligen Basisabschnitt der jeweiligen Fixierstifthalterung mit der Zahnprothese verbunden ist;
- Fig. 9: eine perspektivische Ansicht von der Seite der Zahnprothese mit den Fixierstifthalterungen nach Fig. 8, wobei auf eine der Fixierstifthalterungen in Richtung der Längsachse eine dazu passsende Führungshülse aufgeschoben ist, wobei die Führungshülse bevorzugt seitlich oder quer zur Längsachse einen Haltearmgriff aufweist, um die Führungsbuchse manuell halten zu können;
- Fig. 10: eine Ausbildungsform der Führungshülse mit dem seitlich abstehenden Haltearmgriff nach Fig. 9, die an die jeweilige Fixierstifthalterung gemäß Fig. 8 angepasst ist; links als eine Draufsicht von oben in Richtung einer Längsachse der Führungshülse, in der Mitte als eine um 90° gedrehte Seitenansicht, worin die Längsachse um 90°nach rechts gedreht ist, und rechts im Bild die gleiche Seitenansicht, wie in der Mitte, jedoch mit einem Abschnitt einem darin eingeschobenen Führungsabschnitt der Fixierstifthalterung
- Fig. 11: eine Ansicht von unten eines Ausschnitts des Führungsabschnitts und der Führungshülse in einem miteinander zusammengesteckten Zustand;
- Fig. 12: eine perspektivische Ansicht der Fixierstifthalterung nach Fig. 8-11, wobei in den Führungsabschnitt die erste Buchse eingesetzt ist;
- Fig. 13: eine teilweise geschnittene Seitenansicht der Führungshülse mit dem seitlich abstehenden Haltearmgriff nach Fig. 10 Mitte und rechts, wobei das Schnittbild einen Innenadapterabschnitt mit Innenadaptermantelflächen zeigt; und
- Fig. 14: eine Seitenansicht einer weiteren Ausführungsform des Führungsabschnitts ähnlich zu Fig. 12 und eine teilweise geschnittene Seitenansicht einer weiteren Ausführungsform der Führungshülse ähnlich zu Fig. 10 und Fig. 13, wobei die Fixierstifthalterung eine obere Stirnfläche aufweist die in einem ersten Winkel zu der Längsachse ausgebildet ist und wobei die untere Stirnfläche der Führungshülse in einem zweiten Winkel zur Führungshülsenlängsachse ausgebildet ist.

### Detaillierte Beschreibung von Ausführungsbeispielen

In Fig. 1 aus dem Stand der Technik ist eine Zahnprothese 4 in einer perspektivischen Seitenansicht dargestellt, wobei in der Zahnprothese 4 Fixierstifthalterungen 1 fest darin eingebracht sind und in der jeweiligen Fixierstifthalterung 1 jeweils ein Fixierstift 3 eingesteckt ist. Fig. 2 zeigt die gleiche Zahnprothese 4, wie Fig. 1, mit den darin integrierten Fixierstifthalterungen 1 und Fixierstiften 3 in einer perspektivischen Ansicht von unten. Wie eingangs erwähnt dienen die Fixierstifthalterungen 1, die jeweils eine Führungsbohrung aufweisen, zu einer temporären Befestigung der Zahnprothese 4 in einem Mund des Patienten und genauer am Kiefer des Patienten durch Eintreiben der Fixierungsstifte 3 durch die jeweilige Fixierstifthalterung 1 bis in den Kieferknochen, wo bevorzugt schon entsprechende Löcher vorgebohrt worden sind. Nach einem entsprechenden Einsetzen und temporären Befestigen der Zahnprothese 4 am Kiefer kann die Zahnprothese 4 dem Mund und der restlichen Zahnstruktur des Patienten entsprechend angepasst werden. Nach einer solchen Anpassung wird die Zahnprothese 4 aus dem Mund entnommen, und es werden etwaige an der Zahnprothese 4 seitlich überstehende Abschnitte oder Teile der Fixierstifthalterungen 1 entfernt, beispielsweise durch Abfräsen oder Abschleifen, und die Führungsbohrungen bevorzugt ausgefüllt. Bevorzugt wird die Zahnprothese 4 dann seitlich geglättet und für einen nachfolgenden Dauereinsatz verblendet. Soweit der Stand der Technik.

Die Fixierstifthalterung 1 gemäß der vorliegenden Erfindung ist dafür ausgebildet, in eine Zahnprothese 4 integrierbar oder darin schon integriert zu sein, wie beispielsweise durch Einkleben, ein Eingießen, ein integrales Gießen als ein Abdruck oder durch ein gesamtes oder teilweises Ausfräsen aus einem Block oder aus einem Abdruck. Die Fixierstifthalterung 1 ist entlang einer Längsachse ausgebildet, um durch die Fixierstifthalterung 1 entlang der Längsachse den Fixierstift 3 hindurchstecken zu können, um eine Verbindung mit dem Kiefer des Patienten herstellen zu können.

Dabei umfasst die erfindungsgemäße Fixierstifthalterung 1, wie sie als eine erste bevorzugte Ausführungsform in Fig. 3 und 4 dargestellt ist, einen Basisabschnitt 12, der ausgebildet ist, mit der Zahnprothese 4 integral verbindbar zu sein oder der einstückig mit der Zahnprothese 4 ausgebildet ist. Bevorzugt ist der Basisabschnitt 12 dabei rotationssymmetrisch um die Längsachse ausgebildet. Bevorzugt ist der Basisabschnitt 12 entlang der Längsachse von einem ersten Ende 10, das vorbestimmt ist, in der Zahnprothese 4 am nächsten am Kiefer angeordnet zu sein, zu einem zweiten Abschnitt, der seitlich außen an der Zahnprothese 4 zum Vorschein kommt, durch einen zylindrischen Abschnitt und einen anschließenden stumpfkegeligen Abschnitt ausgebildet. Dabei weist der Basisabschnitt 12 eine seitliche erste Mantelfläche 15 auf, die bevorzugt stumpfkegelig ist und sich vom ersten Ende 10 zum zweiten Abschnitt hin verjüngt.

Dabei weist der Basisabschnitt 12 einen Außenadapterabschnitt 11 auf, der integral mit dem Basisabschnitt 12 verbunden ist und sich entlang der Längsachse vom Basisabschnitt 12 aus zu einem äußeren Ende 16 hin mit einer Außenadapterlänge und einen Außenadapterquerschnitt erstreckt. In anderen Worten erstreckt sich der Außenadapterabschnitt 11 vom zweiten Abschnitt des Basisabschnitts 12 aus zum äußeren Ende hin. Der Außenadapterquerschnitt kann dabei sowohl gleichbleibend als aber auch variabel ausgebildet sein. Beispielsweise kann sich der Außenadapterabschnitt 11 vom zweiten Abschnitt zum äußeren Ende 16 hin leicht konisch erstrecken und/oder am äußeren Ende 16 eine umlaufende gerundete obere Kante aufweisen. Bevorzugt ist das Außenadapterabschnitt 11 stab-, bolzen-, stift- oder rohrförmig ausgebildet und weist eine Außenadaptermantelfläche 11a auf. Bevorzugt verläuft die Außenadaptermantelfläche 11a entlang der Außenadapterlänge zumindest teilweise parallel zur Längsachse. Bevorzugt verläuft die Außenadaptermantelfläche 11a entlang der Außenadapterlänge zumindest teilweise in einem Winkel von 0,01 - 0,1° konisch zur Längsachse. Zur Klarheit ist das äußere Ende 16 des Außenadapterabschnitts 11 das Ende, das bei einer Integration in der Zahnprothese 4 am weitesten seitlich außen angeordnet ist.

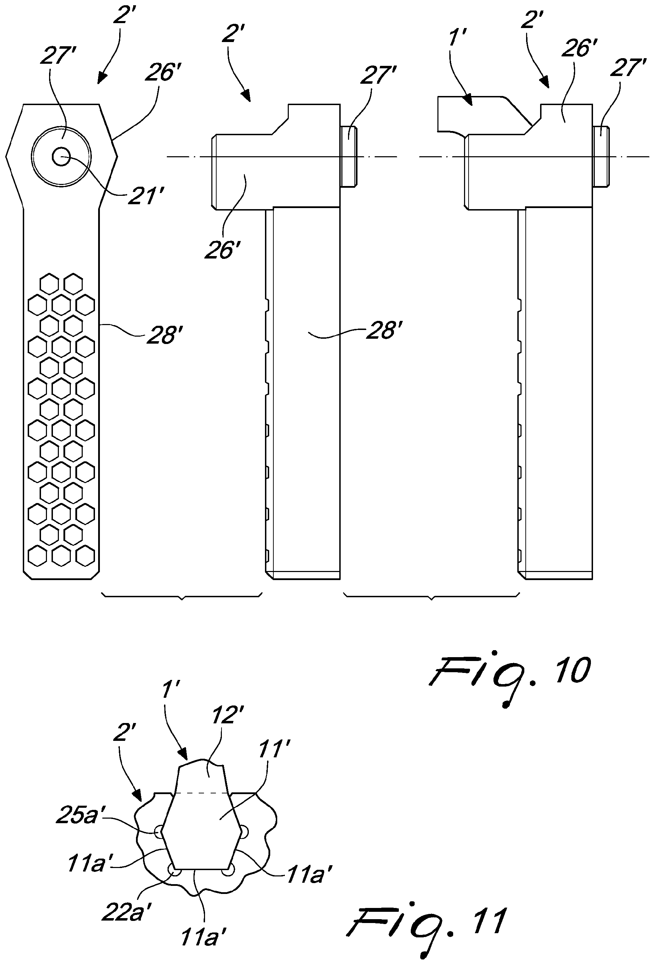

Zudem weist die Fixierstifthalterung 1 erfindungsgemäß eine dazu separate Führungshülse 2 auf, die entlang einer Führungshülsenlängsachse länglich hülsenartig und mit einem inneren Führungskanal 21, der beidseitig nach außen offen ist, ausgebildet ist. Die Führungshülse 2 weist an einem ersten Ende 20 entlang der Führungshülsenlängsachse einen inneren becherartigen Innenadapterabschnitt 22 auf, der eine Innenadapterlänge und einen Innenadapterquerschnitt aufweist. Der innere becherartige Innenadapterabschnitt 22 weist dabei eine Innenadaptermantelfläche 22a auf. Bevorzugt ist die Innenadaptermantelfläche 22a parallel zur Führungshülsenlängsachse oder mit einer Abweichung dazu von 0,01 - 0,1° ausgebildet. Zur Klarheit ist das erste Ende 20 der Führungshülse 2 dasjenige Ende, das bei einem Zusammenstecken der Führungshülse 2 mit der Fixierstifthalterung 1 mit dem Außenadapterabschnitt 11 als erstes in Berührung kommt. Bevorzugt weist die Führungshülse 2 einen seitlich abstehenden Haltegriff oder Handarmgriff auf, der sich in einem Winkel von 45° - 135° und weiter bevorzugt in einem Winkel von 80-100° zur Führungshülsenlängsachse seitlich weg erstreckt, um die Führungshülse 2 manuell besser halten zu können, wie beispielsweise in Fig. 10 als die Führungshülse 2' mit dem Haltearmgriff 28' dargestellt. Bevorzugt kann ein Haltegriff 28 auch koaxial oder z-förmig koaxial zur Führungshülsenlängsachse ausgeführt sein.

Dabei sind der Innenadapterabschnitt 22 mit der Innenadapterlänge und dem Innenadapterquerschnitt und der Außenadapterabschnitt 11 mit der Außenadapterlänge und dem Außenadapterquerschnitt so zueinander passend ausgebildet, dass sie genau passend aufeinander steckbar sind und dabei eine Verbindung bilden. Die Passung zwischen dem Innenadapterabschnitt 22 und dem Außenadapterabschnitt 11 ist bevorzugt eine Presspassung oder eine Passung mit einem Spiel von bevorzugt 0-100 µm oder weiter bevorzugt von 0-50 µm oder noch weiter bevorzugt von 0-30 µm oder noch weiter bevorzugt von 10-30 µm. Die Passung zwischen dem Innenadapterabschnitt 22 und dem Außenadapterabschnitt 11 ist dabei ausgebildet, genügend stabil zu sein, um mit einer vorbestimmten Toleranz durch die Führungshülse 2 hindurch ein Loch in die Fixierstifthalterung 1 bohren zu können, in das der Fixierstift 3 passt. Bevorzugt ist die Toleranz kleiner als +/- 0,5°.

Es versteht sich, dass in der Zahnprothese 4 eine oder mehrere jeweilige Fixierstifthalterungen 1 ausgebildet sein können, auf die jeweils die Führungshülse 2 aufgesteckt werden kann. Dabei kann auch auf jede Fixierstifthalterung 1 eine eigene Führungshülse 2 aufgesteckt werden, um den Arbeitsvorgang zu beschleunigen.

Bevorzugt ist die Fixierstifthalterung 1 aus einem weicheren Material als die Führungshülse 2 ausgebildet. Bevorzugt ist die Fixierstifthalterung 1 aus einem Kunststoff und die Führungshülse 2 aus einem Metall ausgebildet. Bevorzugt weist die Fixierstifthalterung 1 entlang der Längsachse eine erste Buchse mit einer Bohrung auf, wobei die erste Buchse aus einem härteren Material als der Rest der Fixierstifthalterung (1) ist.

Bevorzugt weisen der Innenadapterabschnitt 22 und der Außenadapterabschnitt 11 zueinander eine solche Passung auf, dass sie nach einem aufeinander gesteckten Zustand wieder voneinander lösbar sind.

Bevorzugt ist der Basisabschnitt 12 der Fixierstifthalterung 1 mit der Zahnprothese 4 integral verbunden oder darin eingegossen oder eingeschraubt oder eingeklebt. Alternativ bevorzugt ist die Fixierstifthalterung 1 mit der Zahnprothese 4 aus einem Basismaterial ausgefräst oder ausgegossen.

Bevorzugt ist die Fixierstifthalterung 1 auf dem Basisabschnitt 12 annular um den Außenadapterabschnitt 11 herum, der sich aus dem Basisabschnitt 12 heraus erstreckt, eine erste Stirnfläche 13 ausgebildet, die sich annular um die Längsachse herum mit einem ersten Winkel zur Längsachse hin erstreckt. Bevorzugt erstreckt sich die erste Stirnfläche 13 annular um die Längsachse vom Außenadapterabschnitt 11 bis zu einer seitlichen ersten Mantelfläche 15 des Basisabschnitts 12. Bevorzugt weist die Führungshülse 2 dabei eine um die Führungshülsenlängsachse annulare dritte Stirnfläche 23 auf, die am ersten Ende 20 der Führungshülse 2 zwischen einer zweiten äußeren Mantelfläche 26 der Führungshülse 2 und dem Innenadapterabschnitt 22 mit dem ersten Winkel zur Führungshülsenlängsachse gebildet ist. Dabei sind die erste Stirnfläche 13 und die dritte Stirnfläche 23 so zueinander ausgebildet, dass sie in dem aufeinander gesteckten Zustand der Führungshülse 2 auf der Fixierstifthalterung 1 aufeinander liegen und einen vorbestimmten Anschlag zueinander bilden.

Allgemein ist die Längsachse der Fixierstifthalterung 1 bevorzugt koaxial mit der Führungshülsenlängsachse der Führungshülse 2.

Bevorzugt weist die Führungshülse 2 am ersten Ende 20 eine Aussparung 25 auf, die um die Führungshülsenlängsachse herum zwischen der dritten Stirnfläche 23 und dem Innenadapterabschnitt 22 annular so ausgebildet ist, dass die Aussparung einen äußeren Randbereich des Innenadapterabschnitts 22 am ersten Ende 20 um eine Aussparungsbreite erweitert, so dass die Aussparung 25 in dem aufeinander gesteckten Zustand zwischen der Führungshülse 2 und der Fixierstifthalterung 1 einen Hohlraum zwischen der Führungshülse 2 und der Fixierstifthalterung 1 bildet. Der Hohlraum hat dabei senkrecht zur Führungshülsenlängsachse die Aussparungsbreite und hat eine Aussparungstiefe entlang der Führungshülsenlängsachse, die kleiner als die Innenadapterlänge ist. Bevorzugt ist die Aussparungstiefe 0,1 - 1 mm oder weiter bevorzugt 0,1 - 0,5 mm. Die Aussparung 25 dient dazu eine meist fertigungstechnisch bedingte Schräge oder Fase des Außenadapterabschnitts 11 zu der ersten Stirnfläche 13 hin darin aufzunehmen, um den Anschlag zwischen der ersten 13 und der dritten Stirnfläche zu gewährleisten.

Bevorzugt weist die Fixierstifthalterung 1 am äußeren Ende 16 des Außenadapterabschnitts 11 eine zweite Stirnfläche 14 auf, die einen zweiten Winkel zur Längsachse aufweist. Dabei hat die Führungshülse 2 bevorzugt eine vierte Stirnfläche 24, die absatzartig zwischen dem Innenadapterabschnitt 22 und dem Führungskanal 21 mit dem zweiten Winkel zur Führungshülsenlängsachse hin ausgebildet ist. Dabei sind die zweite Stirnfläche 14 und die vierte Stirnfläche 24 so zueinander ausgebildet, dass sie in dem aufeinander gesteckten Zustand der Führungshülse 2 auf der Fixierstifthalterung 1 aufeinander liegen und einen vorbestimmten Anschlag zueinander bilden.

Bevorzugt ist der erste Winkel zur Längsachse und zur Führungshülsenlängsachse ein rechter Winkel oder ein Winkel in einem Bereich von 60-90°.

Bevorzugt ist der zweite Winkel zur Längsachse und zur Führungshülsenlängsachse ein rechter Winkel oder ein Winkel in einem Bereich von 60-90° oder von 30-60°.

Bevorzugt sind die Fixierstifthalterung 1 und die Führungshülse 2 ausgebildet, in dem aufeinander gesteckten Zustand sich ausschließlich durch die Bereiche des Außenadapterabschnitts 11, des Innenadapterabschnitts 22 und/oder durch die erste 13, die zweite 14, die dritte 23 und/oder die vierte Stirnfläche 24 zu berühren. Bevorzugt bleibt in dem aufeinander gesteckten Zustand die erste Mantelfläche 15 der Fixierstifthalterung 1 von der Führungshülse 2 unberührt.

Bevorzugt weist der Außenadapterabschnitt 11 an einem Übergang zwischen der zweiten Stirnfläche 14 zur Außenadaptermantelfläche 11a eine Außenadapterstirnkante 17 auf, die eine Abrundung oder eine Fase an der zweiten Stirnfläche 14 bildet, um die Führungshülse 2 besser und selbstfindender auf den Außenadapterabschnitt 11 stecken zu können. Bevorzugt sind weitere Ecken oder Kanten des Außenadapterabschnitts 11 entlang der Außenadaptermantelfläche 11a gerundet oder mit mindestens einer Fase ausgebildet, um den Innenadapterabschnitt 22 besser auf den Außenadapterabschnitt 11 schieben zu können.

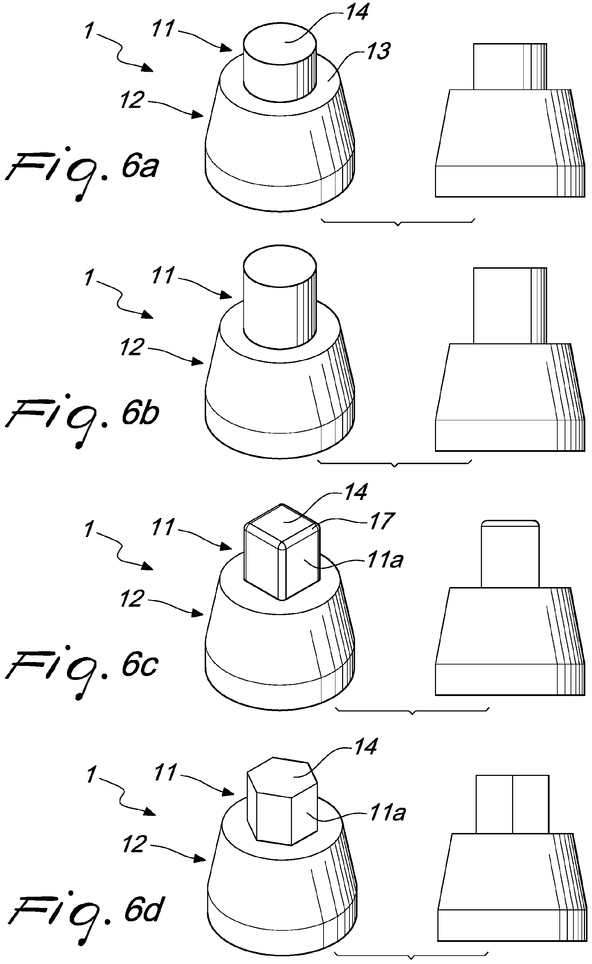

Bevorzugt sind der Außenadapterquerschnitt und dementsprechend der Innenadapterquerschnitt um die Längsachse und Führungshülsenlängsachse verdrehsicher zueinander ausgebildet, um eine Verdrehsicherung zwischen der Fixierstifthalterung 1 und der Führungshülse 2 zu bilden. Dabei kann der Außenadapterquerschnitt und der Innenadapterquerschnitt entlang der Längsachse und Führungshülsenlängsachse nur teilweise oder auf der gesamten Außenadapterlänge eine Verdrehsicherung aufweisen. Die Verdrehsicherung kann dabei beispielsweise durch eine quadratische, rechteckige, ovale oder polygonale Form des jeweiligen Querschnitts gebildet sein. Beispielsweise kann auch eine Keilwellenverbindung zwischen der Außenadaptermantelfläche 11a und der Innenadaptermantelfläche 22a gebildet sein. Alternativ oder zusätzlich kann die Verdrehsicherung gebildet werden, indem die zweite Stirnfläche 14 und die vierte Stirnfläche 24 zur Längsachse und zur Führungshülsenlängsachse schräg ausgebildet werden; Fig. 7 zeigt dazu eine bevorzugte Ausbildungsform der Fixierstifthalterung 1, worin die zweite Stirnfläche 14 die Längsachse schräg schneidet. Bevorzugte Ausbildungsformen der Fixierstifthalterungen 1 mit polygonalen Außenadapterquerschnitten als Verdrehsicherung sind als Beispiele in Fig. 6c und Fig. 6d dargestellt. Dahingegen weisen die bevorzugten Ausbildungsformen der Fixierstifthalterungen 1 in Fig. 6a und Fig. 6b keinen Außenadapterquerschnitt mit Verdrehsicherung auf.

Eine bevorzugte erfindungsgemäße zweite Ausführungsform der Fixierstifthalterung 1' mit dazu passender Führungshülse 2' weist die gleichen wesentlichen Merkmale wie die erste Ausführungsform auf und ist beispielartig in den Figuren Fig. 8 - Fig. 14 dargestellt. Darin ist die Fixierstifthalterung 1' ebenso wie die erste Ausführungsform dafür ausgebildet ist, in eine andere Zahnprothese 4 integrierbar oder darin integriert zu sein, um entlang ihrer Längsachse über den entsprechenden Fixierstift 3 (in Fig. 8-13 nicht dargestellt) mit einem Kiefer eines Patienten verbunden werden zu können, der zuvor gebohrte Löcher aufweist, in die der Fixierstift 3, der durch die Fixierstifthalterung 1' schiebbar ist, hineinragen kann. Durch den Fixierstift 3, der durch die Fixierstifthalterung 1' in den Kiefer hineinragt, kann die Zahnprothese 4 mit dem Kiefer temporär verankert werden. In Fig. 8 ist eine beispielartige Ausführungsform der Zahnprothese 4' mit drei Fixierstifthalterungen 1' dargestellt, wobei in die rechte Fixierstifthalterungen 1' eine erste Buchse 18' mit einer Bohrung 18a' eingesetzt ist.

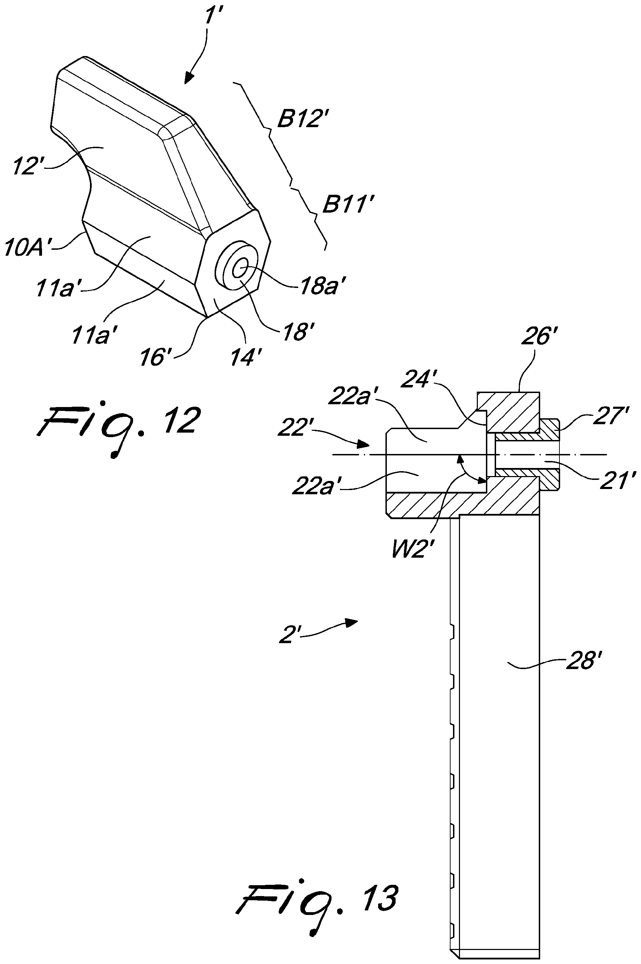

Die Fixierstifthalterung 1' umfasst dabei einen Führungsabschnitt 11', der sich entlang der Längsachse erstreckt und diese allseitig umgibt, wobei der Führungsabschnitt 11' mindestens eine Führungsfläche 11a' oder zwei zur Längsachse gegenüberliegende Führungsflächen 11a' und eine Führungsabschnittslänge entlang der Längsachse aufweist. Fig. 8 zeigt ein Beispiel dazu. Bevorzugt verläuft die mindestens eine Führungsfläche 11a' in Richtung der Längsachse oder in einem spitzen Winkel dazu von einem unteren Ende 10A zu einer gegenüberliegenden oberen Stirnfläche 14'. Beispielsweise liegt der spitze Winkel in einem Bereich von 0-15° oder 0-30°. In Fig.8 und Fig. 12 sind die Führungsflächen 11a' beispielartig dargestellt. Bevorzugt ist die mindestens eine Führungsfläche 11a' planar. In Fig. 12 ist der Bereich des Basisabschnitts 12' mit B12' und der Bereich der Fixierstifthalterung 11' mit B11' gekennzeichnet; der Übergang zwischen dem Basisabschnitt 12' und der Fixierstifthalterung 11' ist bevorzugt fließend und nur eine Definitionsfrage.

Die Fixierstifthalterung 1' umfasst dabei auch einen Basisabschnitt 12', der integral oder einstückig mit dem Führungsabschnitt 11' verbunden ist und sich außerhalb der Führungsfläche 11a' seitlich vom Führungsabschnitt 11' weg erstreckt. Dabei ist der Basisabschnitt 12' mit der Zahnprothese 4 integral verbindbar oder einstückig mit der Zahnprothese 4. Bevorzugt ist dabei der Basisabschnitt 12' als Verbindungselement zwischen dem Führungsabschnitt 11' und der Zahnprothese 4' ausgebildet. Bevorzugt ist die Fixierstifthalterung 1' mit dem Führungsabschnitt 11' und dem Basisabschnitt 12' so ausgebildet, dass die Fixierstifthalterung 1' an einer Zahnprothese 4'seitlich nach außen absteht.

Die Führungshülse 2' ist dabei entlang der Führungshülsenlängsachse länglich und hülsenartig mit einem inneren Führungskanal 21' ausgebildet ist, der beidseitig nach außen offen ist, und in einem Abschnitt entlang der Führungshülsenlängsachse einen inneren, becherartigen Innenadapterabschnitt 22' mit einem Innenadapterquerschnitt und einer Innenadapterlänge aufweist.

Der Innenadapterabschnitt 22' mit der Innenadapterlänge und dem Innenadapterquerschnitt und der Führungsabschnitt 11' mit der Führungsfläche 11a' und der Führungsabschnittslänge sind dabei so zueinander passend ausgebildet, dass sie entlang der Längsachse, die mit der Führungshülsenlängsachse zusammenfällt, aufeinander rotationsfest steckbar sind und dabei eine Verbindung bilden. So kann durch die Führungshülse 2' hindurch ein Loch in die Fixierstifthalterung 1' gebohrt werden, durch das dann der Fixierstift 3 hindurchführbar ist. Bevorzugt ist der Innenadapterquerschnitt entlang der Innenadapterlänge zumindest teilweise so ausgebildet, dass die dabei gebildeten Innenadaptermantelflächen 22a' in Richtung der Führungshülsenlängsachse oder in einem spitzen Winkel dazu verlaufen.

Es versteht sich hier genauso, wie bei den Ausführungsformen der Fixierstifthalterung 1, dass in der Zahnprothese 4 eine oder mehrere jeweilige Fixierstifthalterungen 1' ausgebildet sein können, auf die jeweils die Führungshülse 2' aufgesteckt werden kann. Dabei kann auch auf jede Fixierstifthalterung 1' eine eigene Führungshülse 2' aufgesteckt werden, um den Arbeitsvorgang zu beschleunigen.

Bevorzugt sind Innenadapterabschnitt 22' und der Führungsabschnitt 11' mit der mindestens einen Führungsfläche 11a' hinsichtlich der Innenadapterlänge so zueinander passend ausgebildet, dass dabei eine Einstecktiefe entlang der Längsachse von bevorzugt 3-5 mm oder weiter bevorzugt von 3-8 mm oder noch weiter bevorzugt von 5-10 mm ergibt.

Bevorzugt sind der Innenadapterabschnitt 22' und der Führungsabschnitt 11' mit der mindestens einen Führungsfläche 11a' durch abgeschrägte oder abgerundete Kanten zueinander so passend ausgebildet, dass die abgeschrägten oder abgerundeten Kanten ein leichteres Einführen und/oder eine Selbstfindung ineinander ermöglichen, als wenn die abgeschrägten oder abgerundeten Kanten nicht vorhanden wären.

Bevorzugt weist der Innenadapterabschnitt 22' an der mindestens einen Innenadaptermantelfläche 22a' Aussparungsbereiche 25a' auf, die so angeordnet und ausgebildet sind, dass gegenüberliegende Kanten der mindestens einen Führungsfläche 11a' des Führungsabschnitts 11' darin zumindest teilweise so eintauchen können, dass die Kanten den Innenadapterabschnitt 22' nicht berühren. Die Aussparungsbereiche 25a' erleichtern die Produktion und die Passung des Innenadapterabschnitts 22' mit dem Führungsabschnitt 11'. In Fig. 11 sind solche Aussparungsbereiche 25a' beispielartig dargestellt.

Dabei sind der Innenadapterabschnitt 22' mit der mindestens einen Innenadaptermantelfläche 22a' und die mindestens eine Führungsfläche 11a' des Führungsabschnitts 11' so zueinander passend ausgebildet, dass sie genau passend aufeinander steckbar sind und dabei eine Verbindung bilden. Die Passung zwischen der mindestens einen Innenadaptermantelfläche 22a' und der mindestens einen Führungsfläche 11a' ist bevorzugt eine Presspassung oder eine Passung mit einem Spiel von bevorzugt 0-100 µm oder weiter bevorzugt von 0-50 µm oder noch weiter bevorzugt von 0-30 µm oder noch weiter bevorzugt von 10-30 µm. Die Passung zwischen der mindestens einen Innenadaptermantelfläche 22a' und der mindestens einen Führungsfläche 11a' und zwischen dem Führungsabschnitt 11' und der Führungshülse 2' ist dabei ausgebildet, genügend stabil zu sein, um mit einer vorbestimmten Toleranz durch die Führungshülse 2' hindurch ein Loch in die Fixierstifthalterung 1' bohren zu können, in das der Fixierstift passt. Bevorzugt ist die Toleranz kleiner als +/- 0,5°.

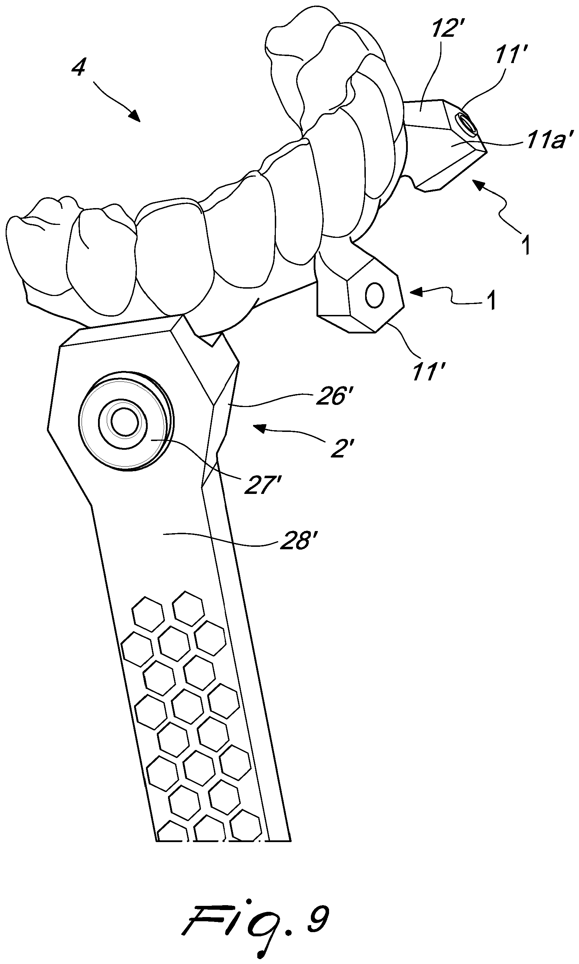

Gemäß der zweiten Ausführungsform der Fixierstifthalterung 1' und der dazu passenden Führungshülse 2' weist die Führungshülse 2' bevorzugt einen seitlich von der Führungshülsenlängsachse abstehenden Haltearmgriff 28' auf, um die Führungshülse 2' besser, als ohne den Haltegriff 28', manuell halten zu können. In Fig. 9, Fig. 10, Fig. 13 und Fig. 14 ist der Haltearmgriff 28' beispielartig dargestellt. Eine äußere zweite Mantelfläche 26' der Führungshülse 2' umschließt die Führungshülsenlängsachse bevorzugt ganz oder zumindest teilweise. Bevorzugt bleibt entlang der Führungshülsenlängsachse und in einem Verbindungsabschnitt zur Fixierstifthalterung 11' hin ein Abschnitt der Führungshülse 2' nach außen hin offen, so dass die zweite Mantelfläche 26' in diesem Bereich offen bleibt und der Basisabschnitt 12' darin eintauchen kann.

Gemäß der zweiten Ausführungsform der Fixierstifthalterung 1' und der dazu passenden Führungshülse 2' weist die Fixierstifthalterung 1' bevorzugt entlang der Längsachse eine erste Buchse 18' mit einer Bohrung 18a' auf, wobei die erste Buchse 18' aus einem härteren Material als der Rest der Fixierstifthalterung 1' ist. Bevorzugt ist die Fixierstifthalterung 1' aus einem Kunststoff und die Führungshülse 2' bevorzugt aus einem Metall ausgebildet. Alternativ bevorzugt kann die Führungshülse 2' aber auch aus einem Kunststoff sein und eine zweite Buchse 27' mit einem Führungskanal 21', die beispielsweise in Fig. 9 und 10 dargestellt ist, darin eingebracht aufweisen, die eine Stabilität der Führungshülse 2' hinsichtlich einer Bohrerführung durch den Führungskanal 21' erhöht.

Bevorzugt kann die Fixierstifthalterung 1' auch Vorbohrungen aufweisen, so dass während die Führungsbohrung in Verbindung mit der Führungshülse 2' eingebracht wird, weniger Material aus der Fixierstifthalterung 1' entfernt werden muss und die Führungsbohrung dann leichter gebohrt werden kann. Bevorzugt ist die Vorbohrung in die erste Buchse 18' als die Bohrung 18' eingebracht.

Gemäß der zweiten Ausführungsform der Fixierstifthalterung 1' und der dazu passenden Führungshülse 2' weist die Führungshülse 2' bevorzugt eine zweite Buchse 27' auf, die entlang der Führungshülsenlängsachse verläuft und die entlang der Führungshülsenlängsachse einen Führungshülsenführungskanal 21' aufweist, der beidseitig nach oben und unten offen ist.

Gemäß der zweiten Ausführungsform der Fixierstifthalterung 1' und der dazu passenden Führungshülse 2' sind die Fixierstifthalterung 1' bevorzugt aus einem Kunststoff und die Führungshülse 2' bevorzugt aus einem Metall ausgebildet.

Gemäß der zweiten Ausführungsform der Fixierstifthalterung 1' und der dazu passenden Führungshülse 2' sind der Innenadapterabschnitt 22' und der Führungsabschnitt 11' bevorzugt so zueinander passend ausgebildet, dass sie nach einem aufeinander gesteckten Zustand wieder voneinander lösbar sind. Alternativ bevorzugt sind der Innenadapterabschnitt 22' und der Führungsabschnitt 11' bevorzugt so zueinander passend ausgebildet, dass sie nach einem aufeinander gesteckten Zustand nicht manuell voneinander lösbar sind, das heißt also, fest miteinander verbunden bleiben.

Gemäß der zweiten Ausführungsform der Fixierstifthalterung 1' und der dazu passenden Führungshülse 2' ist der Basisabschnitt 12' der Fixierstifthalterung 1' mit der Zahnprothese 4 bevorzugt integral verbunden oder darin eingegossen, eingeschraubt oder eingeklebt oder zusammen mit mindestens einem anderen Teil der Zahnprothese 4 zusammen aus einem Basismaterial ausgefräst oder ausgegossen.

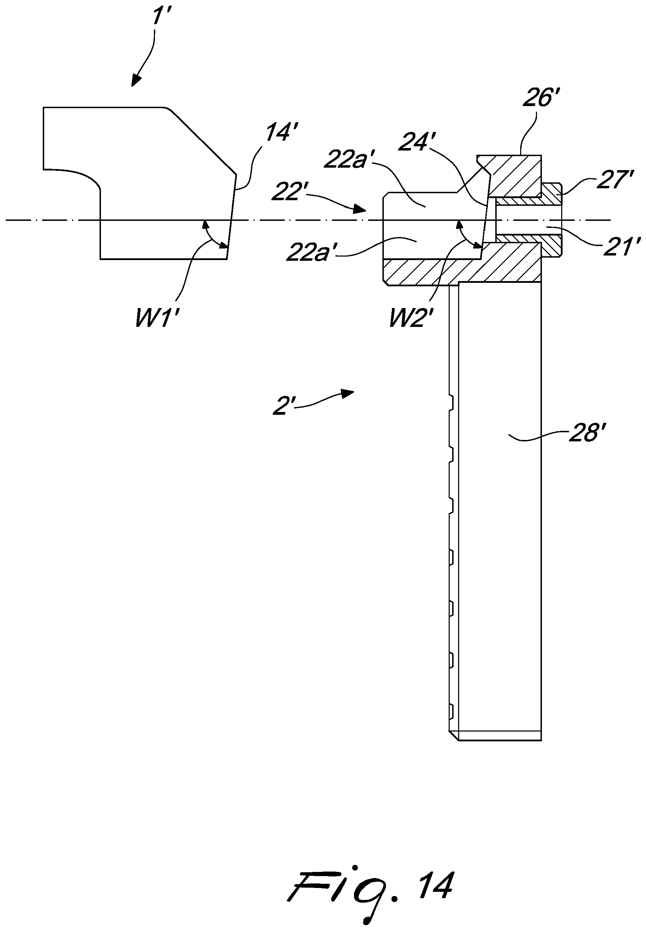

Gemäß der zweiten Ausführungsform der Fixierstifthalterung 1' und der dazu passenden Führungshülse 2' weist die Fixierstifthalterung 1' bevorzugt eine obere Stirnfläche 14' mit einem ersten Winkel W1' zur Längsachse auf, wobei die Führungshülse 2' eine untere Stirnfläche 24' aufweist, die absatzartig zwischen dem Innenadapterabschnitt 22' und dem Führungskanal 21' mit einem zweiten Winkel W2' zur Führungshülsenlängsachse gebildet ist. Dabei sind die obere Stirnfläche 14' der Fixierstifthalterung 1' und die untere Stirnfläche 24' der Führungshülse 2' so zueinander ausgebildet, dass sie in dem aufeinander gesteckten Zustand der Führungshülse 2' auf der Fixierstifthalterung 1' aufeinander liegen und einen vorbestimmten Anschlag zueinander bilden. Bevorzugt ist dabei der erste und der zweite Winkel zur Längsachse und zur Führungshülsenlängsachse ein rechter Winkel von 90° oder ein Winkel in einem Bereich von 60-90° oder von 30-60°. In Fig. 13 ist eine solche Ausbildungsform mit dem ersten Winkel W1 und dem zweiten Winkel W2 von jeweils 90° beispielartig dargestellt. In Fig. 14 ist eine solche Ausbildungsform mit dem ersten Winkel W1 und dem zweiten Winkel W2 von jeweils ca. 80° beispielartig dargestellt.

Gemäß der zweiten Ausführungsform der Fixierstifthalterung 1' und der dazu passenden Führungshülse 2' sind die Fixierstifthalterung 1' und die Führungshülse 2' derart ausgebildet, um in dem aufeinander gesteckten Zustand sich ausschließlich durch die Bereiche des Führungsabschnitts 11' und des Innenadapterabschnitts 22' zu berühren.

Bevorzugt ist die Längsachse der Fixierstifthalterung 1' allgemein koaxial mit der Führungshülsenlängsachse im aufgesteckten Zustand.

Gemäß der zweiten Ausführungsform der Fixierstifthalterung 1' und der dazu passenden Führungshülse 2' sind der Querschnitt des Führungsabschnitts 11' und der Innenadapterquerschnitt um die Längsachse und Führungshülsenlängsachse quadratisch, hexagonal, oval, sternförmig, vieleckig oder vieleckig ausgebildet, um eine Verdrehsicherung zwischen der Fixierstifthalterung 1 und der Führungshülse 2 zu bilden.

Gemäß der zweiten Ausführungsform der Fixierstifthalterung 1' und der dazu passenden Führungshülse 2' sind der Querschnitt des Führungsabschnitts 11' und der Innenadapterquerschnitt um die Längsachse und die Führungshülsenlängsachse mit gerundeten Ecken ausgebildet.

Ein Verfahren zur Herstellung des Lochs in der Fixierstifthalterung 1, die in einer Zahnprothese 4 integrierbar ist, weist folgende konsekutive Schritte auf:
- Bereitstellen der Fixierstifthalterung 1, die dazu ausgebildet ist, in der Zahnprothese 4 integrierbar zu sein und um nach einem Nachbearbeitungsschritt einer Aufnahme eines entsprechenden Fixierstifts 3 zu dienen, der im Mund eines Patienten durch die Fixierstifthalterung 1 hindurch in den Kiefer hinein bewegbar ist, um die Zahnprothese 4 mit dem Kiefer zu verbinden, wobei die Fixierstifthalterung 1 einen Basisabschnitt 12 und einen Außenadapterabschnitt 11 aufweist und der Außenadapterabschnitt 11 entlang einer Längsachse mit einem Außenadapterquerschnitt und einer Außenadapterlänge sich nach außen vom Kiefer weg erstreckt;
- Bereitstellen einer Führungshülse 2, die entlang einer Führungshülsenlängsachse als ein längliches hülsenartiges Teil mit einem inneren Führungskanal 21, der beidseitig nach außen offen ist, ausgebildet ist und an einem ersten Ende 20 entlang der Führungshülsenlängsachse einen inneren becherartigen Innenadapterabschnitt 22 aufweist, der aufsteckbar passend zum Außeradapterabschnitt 11 ausgebildet ist;
- Integration der mindestens einen Fixierstifthalterung 1 in der Zahnprothese 4;
- Aufstecken der Führungshülse 2 auf die Fixierstifthalterung 1 bis zu einem vorbestimmten Anschlag zwischen der Führungshülse 2 und der Fixierstifthalterung 1;
- Einführen eines Bohrers durch den inneren Führungskanal 21 der Führungshülse 2 und Bohren einer Führungsbohrung durch die Fixierstifthalterung 1 als dem Nachbearbeitungsschritt, um durch die Führungsbohrung ein nachfolgendes Hindurchbewegen des Fixierstifts 3 zu ermöglichen;
- Nach dem jeweiligen Bohren der Führungsbohrung, Abziehen der Führungshülse 2 von der Fixierstifthalterung 1;
- Nach einer bevorzugten Anpassung der Zahnprothese 4: Entfernen, beispielsweise durch Abfräsen oder Abschleifen, mindestens des seitlich nach außen abstehenden Außenadapterabschnitts 12 der Fixierstifthalterung 1, bevorzugt zu einer anschließenden weiteren Verwendung im Mund des Patienten.

Die Anpassung der Zahnprothese 4 wird dabei bevorzugt durch ein temporäres Einsetzen und Fixieren der Zahnprothese 4 im Mund des Patienten durch die Fixierstifte 3 und Anpassen der Zahnprothese 4 im Mund des Patienten vorgenommen. Danach folgen bevorzugt die Schritte: Entnehmen der Zahnprothese 4 aus dem Mund des Patienten und Entfernen, beispielsweise durch Abfräsen oder Abschleifen, mindestens der seitlich nach außen abstehenden Außenadapterabschnitte 12 der Fixierstifthalterung 1, zu einer anschließenden weiteren Verwendung im Mund des Patienten.

Ein alternatives Verfahren zur Herstellung des Lochs in der Fixierstifthalterung 1, die schon in einer Zahnprothese 4 integriert ist, weist folgende konsekutive Schritte auf:
- Herstellen der Zahnprothese 4 mit darin eingegossenen oder ausgefrästen Fixierstifthalterungen 1, die dazu ausgebildet sind, nach einem Nachbearbeitungsschritt einer Aufnahme eines entsprechenden Fixierstifts 3 zu dienen, der im Mund eines Patienten durch die Fixierstifthalterung 1 hindurch in den Kiefer schiebbar ist, um die Zahnprothese 4 mit dem Kiefer zu verbinden, wobei die Fixierstifthalterung 1 einen Basisabschnitt 12 und einen Außenadapterabschnitt 11 aufweist und der Außenadapterabschnitt 11 entlang einer Längsachse mit einem Außenadapterquerschnitt und einer Außenadapterlänge sich nach außen vom Kiefer weg erstreckt;
- Bereitstellen einer Führungshülse 2, die entlang einer Führungshülsenlängsachse als ein längliches hülsenartiges Teil mit einem inneren Führungskanal 21, der beidseitig nach außen offen ist, ausgebildet ist und an einem ersten Ende 20 entlang der Führungshülsenlängsachse einen inneren becherartigen Innenadapterabschnitt 22 aufweist, der aufsteckbar passend zum Außeradapterabschnitt 11 ausgebildet ist;
- Aufstecken der Führungshülse 2 auf die Fixierstifthalterung 1 bis zu einem vorbestimmten Anschlag zwischen der Führungshülse 2 und der Fixierstifthalterung 1;
- Einführen eines Bohrers durch den inneren Führungskanal 21 der Führungshülse 2 und Bohren einer Führungsbohrung durch die Fixierstifthalterung 1 als dem Nachbearbeitungsschritt, um durch die Führungsbohrung ein nachfolgendes Hindurchbewegen des Fixierstifts 3 zu ermöglichen;
- Nach dem Bohren der Führungsbohrung, Abziehen der Führungshülse 2 von der Fixierstifthalterung 1;
- Nach einer bevorzugten Anpassung der Zahnprothese 4: Entfernen, beispielsweise durch Abfräsen oder Abschleifen, mindestens der seitlich nach außen abstehenden Außenadapterabschnitte 12 der Fixierstifthalterung 1, bevorzugt zu einer anschließenden weiteren Verwendung im Mund des Patienten.

Die Anpassung der Zahnprothese 4 wird dabei bevorzugt durch ein temporäres Einsetzen und Fixieren der Zahnprothese 4 im Mund des Patienten durch die Fixierstifte 3 und Anpassen der Zahnprothese 4 im Mund des Patienten vorgenommen. Danach folgen bevorzugt die Schritte: Entnehmen der Zahnprothese 4 aus dem Mund des Patienten und Entfernen, beispielsweise durch Abfräsen oder Abschleifen, mindestens der seitlich nach außen abstehenden Außenadapterabschnitte 12 der Fixierstifthalterung 1, zu einer anschließenden weiteren Verwendung im Mund des Patienten.

Ein besonderer Vorteil der beiden oben beschriebenen Verfahren ist, dass die Führungsbohrungen in den Fixierstifthalterungen 1 besser durch die temporär aufgesteckten Führungshülsen 2 gebohrt werden können, als ohne die Führungshülsen 2. Dadurch können die Führungsbohrungen in den Fixierstifthalterungen 1 sowohl genauer gebohrt werden, und es können anschließend, wenn die Führungsbohrungen nicht mehr gebraucht werden, die außen abstehenden Enden der Fixierstifthalterungen 1 besser und schneller entfernt werden.

Hinsichtlich der zweiten Ausführungsform der Fixierstifthalterung 1' mit der dazu passenden Führungshülse 2' umfasst ein dazu passendes erfindungsgemäßes Verfahren zur Herstellung des Lochs in ein der Fixierstifthalterung 1', die in die Zahnprothese 4' integrierbar ist, folgende Schritte:
- Bereitstellen der Fixierstifthalterung 1', die dazu ausgebildet ist, in der Zahnprothese 4' integrierbar zu sein und bevorzugt nach einem Nachbearbeitungsschritt einer Aufnahme eines entsprechenden Fixierstifts 3 zu dienen, der im Mund eines Patienten durch die Fixierstifthalterung 1' hindurch in den Kiefer hinein bewegbar ist, um dadurch die Zahnprothese 4' mit dem Kiefer zu verbinden. Die Fixierstifthalterung 1' weist den Basisabschnitt 12' und den Führungsabschnitt 11' auf, und der Führungsabschnitt 11' erstreckt sich entlang seiner Längsachse mit der mindestens einen Führungsfläche 11a und mit der Führungsabschnittslänge entlang der Längsachse nach außen vom Kiefer weg; bevorzugt ist die mindestens eine Führungsfläche 11a' planar;
- Bereitstellen der Führungshülse 2', die entlang der Führungshülsenlängsachse als ein längliches hülsenartiges Teil mit dem inneren Führungskanal 21', der beidseitig nach außen offen ist, ausgebildet ist und entlang der Führungshülsenlängsachse den inneren becherartigen Innenadapterabschnitt 22' aufweist. Dabei ist der Innenadapterabschnitt 22' ausgebildet, zum Führungsabschnitt 11' passend und darauf aufsteckbar zu sein und den Führungsabschnitt 11' rotationsfest mit der Führungshülse 2' zu verbinden;
- Integration der mindestens einen Fixierstifthalterung 1' in der Zahnprothese 4';
- Aufstecken der Führungshülse 2' auf die Fixierstifthalterung 1' bis zu einem vorbestimmten Anschlag zwischen der Führungshülse 2' und der Fixierstifthalterung 1';
- Optionales Einführen des Bohrers durch den inneren Führungskanal 21' der Führungshülse 2' und Bohren der Führungsbohrung durch die Fixierstifthalterung 1' als dem Nachbearbeitungsschritt; durch die Führungsbohrung wird ein nachfolgendes Hindurchbewegen des Fixierstifts 3 ermöglicht;
- Nach dem Bohren der Führungsbohrung: Abziehen der Führungshülse 2' von der Fixierstifthalterung 1';
- Nach der Anpassung der Zahnprothese 4' Entfernen mindestens des seitlich nach außen abstehenden Führungsabschnitts 11' der Fixierstifthalterung 1', bevorzugt zu einer anschließenden weiteren Verwendung im Mund des Patienten.

Verfahren zur Herstellung des Lochs in der Fixierstifthalterung 1', die in der Zahnprothese 4' integriert ist, folgende Schritte umfassend:
- Herstellen der Zahnprothese 4' mit der darin eingegossenen oder ausgefrästen Fixierstifthalterung 1', die dazu ausgebildet ist, bevorzugt nach einem Nachbearbeitungsschritt der Aufnahme des entsprechenden Fixierstifts 3 zu dienen, der im Mund eines Patienten durch die Fixierstifthalterung 1' hindurch in den Kiefer schiebbar ist, um die Zahnprothese 4 mit dem Kiefer zu verbinden. Dabei weist die Fixierstifthalterung 1' den Basisabschnitt 12' und den Führungsabschnitt 11' auf, und der Führungsabschnitt 11' erstreckt sich entlang seiner Längsachse mit der mindestens einen Führungsfläche 11a' und mit der Führungsabschnittslänge entlang der Längsachse nach außen vom Kiefer weg; bevorzugt ist die mindestens eine Führungsfläche 11a' planar;

- Bereitstellen der Führungshülse 2, die entlang der Führungshülsenlängsachse als ein längliches hülsenartiges Teil mit dem inneren Führungskanal 21, der beidseitig nach außen offen ist, ausgebildet ist und die entlang der Führungshülsenlängsachse einen inneren becherartigen Innenadapterabschnitt 22' aufweist; dabei ist der Innenadapterabschnitt 22' ausgebildet, zum Außeradapterabschnitt 11' passend und darauf aufsteckbar zu sein und den Führungsabschnitt 11' rotationsfest mit der Führungshülse 2' zu verbinden;
- Aufstecken der Führungshülse 2' auf die Fixierstifthalterung 1' bis zu dem vorbestimmten Anschlag zwischen der Führungshülse 2' und der Fixierstifthalterung 1;
- Optionales Einführen des Bohrers durch den inneren Führungskanal 21' der Führungshülse 2' und Bohren der durch die Fixierstifthalterung 1' als dem Nachbearbeitungsschritt; durch die Führungsbohrung wird ein nachfolgendes Hindurchbewegen des Fixierstifts 3 ermöglicht;
- Nach dem Bohren der Führungsbohrung: Abziehen der Führungshülse 2' von der Fixierstifthalterung 1';

Nach der Anpassung der Zahnprothese 4' Entfernen mindestens des seitlich nach außen abstehenden Führungsabschnitts 11' der Fixierstifthalterung 1', bevorzugt zu einer anschließenden weiteren Verwendung im Mund des Patienten.

Zur Klarheit wird ausgedrückt, dass die Zahnprothese 4, 4' eine oder mehrere Fixierstifthalterungen 1, 1' aufweisen kann, auf die jeweils die dazu passende Führungshülse 2, 2' aufgesetzt werden kann.

Zur Klarheit kann die mindestens eine Führungsfläche 11a' und/oder die Außenadaptermantelfläche 11a planar sein.

Zur Klarheit ist der Führungskanal 21, 21' ausgebildet, um durch den Führungskanal 21, 21' im aufgesteckten Zustand zwischen der Führungshülse 2, 2' und der Fixierstifthalterung 1, 1' den Bohrer zu führen, um in die Fixierstifthalterung 1, 1' die Führungsbohrung vorbestimmt einbringen zu können.

Zur Klarheit wird festgehalten, dass die Fixierstifthalterung 1, 1' die Führungsbohrung in einem ersten Zustand nicht aufweist, und die Fixierstifthalterung 1, 1' die Führungsbohrung erst dann aufweist, nachdem die Führungshülse 2, 2' auf der Fixierstifthalterung 1, 1' aufgesetzt worden ist und die Führungsbohrung durch einen Bohrer, der durch die Führungshülse 2, 2' geführt wird, in die Fixierstifthalterung 1, 1' gebohrt worden ist. Danach wird die Führungshülse 2, 2' auf der Fixierstifthalterung 1 bevorzugt nicht mehr gebraucht und davon bevorzugt entfernt.

Zur Klarheit wird unter "passen" verstanden, dass die Führungshülse 2, 2' bevorzugt mit festem Sitz passgenau auf die Fixierstifthalterung 1, 1' steckbar ist und bevorzugt davon auch wieder abnehmbar ist. Bevorzugt sind die Führungshülsen 2, 2' nach dem aufgesteckten Zustand manuell von der jeweiligen Fixierstifthalterung 1, 1' abnehmbar.

Zur Klarheit werden unter den Merkmalen "oben" und "unten" relative Ortsangaben in senkrechter Richtung verstanden, so wie in den Figuren 1, 3, 4, 5, 6a-6d, 7, 8 und 9 dargestellt. Zur Klarheit werden unter den Merkmalen "seitlich", "seitliche", etc. relative Ortsangaben in waagerechter Richtung verstanden, so wie in den Figuren 1, 3, 4, 5, 6a-6d, 7, 8 und 9 dargestellt oder bevorzugt im Wesentlichen senkrecht zu der jeweiligen Längsachse oder Führungshülsenlängsachse. Die Längsachse und/oder die Führungshülsenlängsachse ist strichpunktiert beispielsweise in Fig. 7, 10, 13 und Fig. 14 dargestellt.

Zur Klarheit sei auch angemerkt, dass unbestimmte Artikel in Verbindung mit einem Gegenstand oder Zahlenangaben, wie beispielsweise "ein" Gegenstand den Gegenstand nicht auf zahlenmäßig genau einen Gegenstand begrenzt, sondern, dass damit gemeint ist, dass mindestens "ein" Gegenstand damit gemeint ist. Dies gilt für alle unbestimmten Artikel wie beispielsweise "ein", "eine" usw.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die In den Ansprüchen genannten Bezugszeichen dienen nur der besseren Verständlichkeit und beschränken die Ansprüche in keiner Weise auf die in den Figuren dargestellten Formen.

### Bezuaszeichenliste

- 1, 1': Fixierstifthalterung
- 10: erstes Ende der Fixierstifthalterung
- 10A': unteres Ende
- 11: Außenadapterabschnitt
- 11': Führungsabschnitt
- 11a: Außenadaptermantelfläche
- 11a': Führungsfläche
- 12, 12': Basisabschnitt
- 13: erste Stirnfläche
- 14: zweite Stirnfläche
- 14': obere Stirnfläche der Fixierstifthalterung
- 15: erste Mantelfläche
- 16, 16': äußeres Ende
- 17: Außenadapterstirnkante
- 18': erste Buchse
- 18a': Bohrung der ersten Buchse
- 2, 2': Führungshülse, die eine Fixierstiftführungshülse ist
- 20: erstes Ende der Führungshülse
- 21, 21': Führungskanal
- 22': Innenadapterabschnitt
- 22a': Innenadaptermantelfläche
- 23: dritte Stirnfläche
- 24: vierte Stirnfläche
- 24': untere Stirnfläche der Führungshülse
- 25: Aussparung
- 25a': Aussparungsbereich
- 26, 26': zweite Mantelfläche
- 27': zweite Buchse
- 28': Haltearmgriff
- 3: Fixierstift
- 4, 4': Zahnprothese
- B11': Bereich des Basisabschnitts
- B12': Bereich der Fixierstifthalterung
- W1': erster Winkel
- W2': zweiter Winkel

## Patentansprüche

1. Fixierstifthalterung (1) mit dazu passender Führungshülse (2), wobei die Fixierstifthalterung (1) dafür ausgebildet ist, in eine Zahnprothese (4) integrierbar oder darin integriert zu sein, um entlang ihrer Längsachse über einen entsprechenden Fixierstift (3) mit einem Kiefer eines Patienten verbunden werden zu können, der zuvor gebohrte Löcher aufweist, in die der Fixierstift (3), der durch die Fixierstifthalterung (1) schiebbar ist, hineinragen kann, um die Zahnprothese (4) dadurch mit dem Kiefer temporär zu verankern, die Fixierstifthalterung (1) umfassend:
a) einen Basisabschnitt (12), der ausgebildet ist, mit der Zahnprothese (4) integral verbindbar zu sein oder der einstückig mit der Zahnprothese (4) ist;
b) wobei die Führungshülse (2) entlang einer Führungshülsenlängsachse länglich und hülsenartig mit einem inneren Führungskanal (21), der beidseitig nach außen offen ist, ausgebildet ist;
**dadurch gekennzeichnet, dass**
c) der Basisabschnitt (12) einen damit integral verbundenen Außenadapterabschnitt (11) aufweist, sich entlang der Längsachse vom Basisabschnitt (12) aus mit einer Außenadapterlänge zu einem äußeren Ende (16) hin mit einem Außenadapterquerschnitt erstreckt, wobei das äußere Ende (16) des Außenadapterabschnitts (11) an der Zahnprothese (4) nach außen vom Patienten weg weist;
d) die Führungshülse (2) an einem ersten Ende (20) entlang der Führungshülsenlängsachse einen inneren becherartigen Innenadapterabschnitt (22) mit einer Innenadapterlänge und einem Innenadapterquerschnitt aufweist; und
e) der Innenadapterabschnitt (22) mit der Innenadapterlänge und dem Innenadapterquerschnitt und der Außenadapterabschnitt (11) mit der Außenadapterlänge und dem Außenadapterquerschnitt so zueinander passend ausgebildet sind, dass sie aufeinander steckbar sind und dabei eine Verbindung bilden, die genügend stabil ist, um mit einer vorbestimmten Toleranz durch die Führungshülse (2) hindurch ein Loch in die Fixierstifthalterung (1) bohren zu können, in das der Fixierstift (3) passt.

2. Fixierstifthalterung (1) mit dazu passender Führungshülse (2) gemäß Anspruch 1, wobei die Fixierstifthalterung (1) aus einem Kunststoff und die Führungshülse (2) aus einem Metall ausgebildet sind und/oder wobei die Fixierstifthalterung (1) entlang der Längsachse eine erste Buchse mit einer Bohrung aufweist und die erste Buchse aus einem härteren Material als der Rest der Fixierstifthalterung (1) ist.

3. Fixierstifthalterung (1) mit dazu passender Führungshülse (2) gemäß Anspruch 1 oder 2, wobei der Innenadapterabschnitt (22) und der Außenadapterabschnitt (11) so zueinander passend ausgebildet sind, dass sie nach einem aufeinander gesteckten Zustand wieder voneinander lösbar sind.

4. Fixierstifthalterung (1) mit dazu passender Führungshülse (2) gemäß einem oder mehreren der vorstehenden Ansprüche, wobei der Basisabschnitt (12) der Fixierstifthalterung (1) mit der Zahnprothese (4) integral verbunden ist oder darin eingegossen oder eingeschraubt, eingeklebt ist oder der zusammen mit mindestens einem anderen Teil der Zahnprothese (4) zusammen aus einem Basismaterial ausgefräst oder ausgegossen ist.

5. Fixierstifthalterung (1) mit dazu passender Führungshülse (2) gemäß einem oder mehreren der vorstehenden Ansprüche, wobei die Fixierstifthalterung (1) auf dem Basisabschnitt (12) annular um den Außenadapterabschnitt (11) herum, der sich aus dem Basisabschnitt (12) heraus erstreckt, eine erste Stirnfläche (13) mit einem ersten Winkel zur Längsachse hin aufweist, und die Führungshülse (2) eine um die Führungshülsenlängsachse annulare dritte Stirnfläche (23) aufweist, die am ersten Ende (20) der Führungshülse (2) zwischen einer zweiten Mantelfläche (26) und dem Innenadapterabschnitt (22) mit dem ersten Winkel zur Führungshülsenlängsachse gebildet ist, wobei die erste Stirnfläche (13) und die dritte Stirnfläche (23) so zueinander ausgebildet sind, dass sie in dem aufeinander gesteckten Zustand der Führungshülse (2) auf der Fixierstifthalterung (1) aufeinander liegen und einen vorbestimmten Anschlag zueinander bilden.

6. Fixierstifthalterung (1) mit dazu passender Führungshülse (2) gemäß Anspruch 5, wobei die Führungshülse (2) am ersten Ende (20) eine Aussparung (25) aufweist, die um die Führungshülsenlängsachse herum zwischen der dritten Stirnfläche (23) und dem Innenadapterabschnitt (22) annular so ausgebildet ist, dass die Aussparung einen äußeren Randbereich des Innenadapterabschnitts (22) am ersten Ende (20) um eine Aussparungsbreite erweitert, so dass die Aussparung (25) in dem aufeinander gesteckten Zustand zwischen der Führungshülse (2) und der Fixierstifthalterung (1) einen Hohlraum mit einer annularen Weite und eine Tiefe entlang der Führungshülsenlängsachse, die kleiner als die Innenadapterlänge ist.

7. Fixierstifthalterung (1) mit dazu passender Führungshülse (2) gemäß einem oder mehreren der vorstehenden Ansprüche, wobei die Fixierstifthalterung (1) am äußeren Ende (16) des Außenadapterabschnitts (11) eine zweite Stirnfläche (14) mit einem zweiten Winkel zur Längsachse aufweist, und die Führungshülse (2) eine vierte Stirnfläche (24) aufweist, die absatzartig zwischen dem Innenadapterabschnitt (22) und dem Führungskanal (21) mit dem zweiten Winkel zur Führungshülsenlängsachse gebildet wird, wobei die zweite Stirnfläche (14) und die vierte Stirnfläche (24) so zueinander ausgebildet sind, dass sie in dem aufeinander gesteckten Zustand der Führungshülse (2) auf der Fixierstifthalterung (1) aufeinander liegen und einen vorbestimmten Anschlag zueinander bilden.

8. Fixierstifthalterung (1) mit dazu passender Führungshülse (2) gemäß einem oder mehreren der vorstehenden Ansprüche, wobei der erste Winkel zur Längsachse und zur Führungshülsenlängsachse ein rechter Winkel oder ein Winkel in einem Bereich von 60-90° ist; und/oder
wobei der zweite Winkel zur Längsachse und zur Führungshülsenlängsachse ein rechter Winkel oder ein Winkel in einem Bereich von 60-90° oder von 30-60° ist.

9. Fixierstifthalterung (1) mit dazu passender Führungshülse (2) gemäß einem oder mehreren der vorstehenden Ansprüche, wobei die Fixierstifthalterung (1) und die Führungshülse (2) ausgebildet sind, in dem aufeinander gesteckten Zustand sich ausschließlich durch die Bereiche des Außenadapterabschnitts (11), des Innenadapterabschnitts (22) und/oder durch die erste (13), die zweite (14), die dritte (23) und/oder die vierte Stirnfläche (24) zu berühren.

10. Fixierstifthalterung (1) mit dazu passender Führungshülse (2) gemäß einem oder mehreren der vorstehenden Ansprüche, wobei der Außenadapterquerschnitt und dementsprechend der Innenadapterquerschnitt um die Längsachse und Führungshülsenlängsachse verdrehsicher zueinander oder quadratisch oder oval oder sternförmig oder vieleckig oder vieleckig mit gerundeten Ecken ausgebildet sind, um eine Verdrehsicherung zwischen der Fixierstifthalterung (1) und der Führungshülse (2) zu bilden.

11. Fixierstifthalterung (1') mit dazu passender Führungshülse (2'), wobei die Fixierstifthalterung (1') dafür ausgebildet ist, in eine Zahnprothese (4) integrierbar oder darin integriert zu sein, um entlang ihrer Längsachse über einen entsprechenden Fixierstift (3) mit einem Kiefer eines Patienten verbunden werden zu können, der zuvor gebohrte Löcher aufweist, in die der Fixierstift (3), der durch die Fixierstifthalterung (1') schiebbar ist, hineinragen kann, um die Zahnprothese (4) dadurch mit dem Kiefer temporär zu verankern, die Fixierstifthalterung (1') umfassend:
a) einen Führungsabschnitt (11'), der sich entlang der Längsachse erstreckt und diese allseitig umgibt, wobei der Führungsabschnitt (11') mindestens eine Führungsfläche (11a') und eine Führungsabschnittslänge entlang der Längsachse aufweist; und
b) einen Basisabschnitt (12'), der integral oder einstückig mit dem Führungsabschnitt (11') verbunden ist und sich außerhalb der Führungsfläche (11a') seitlich vom Führungsabschnitt (1 1') weg erstreckt, wobei der Basisabschnitt (12') mit der Zahnprothese (4) integral verbindbar ist oder einstückig mit der Zahnprothese (4) ist;
c) wobei die Führungshülse (2') entlang einer Führungshülsenlängsachse länglich und hülsenartig mit einem inneren Führungskanal (21') ausgebildet ist, der beidseitig nach außen offen ist, und in einem Abschnitt entlang der Führungshülsenlängsachse einen inneren, becherartigen Innenadapterabschnitt (22') mit einem Innenadapterquerschnitt und einer Innenadapterlänge aufweist;
d) wobei der Innenadapterabschnitt (22') mit der Innenadapterlänge und dem Innenadapterquerschnitt und der Führungsabschnitt (1 1') mit der Führungsfläche (11a') und der Führungsabschnittslänge so zueinander passend ausgebildet sind, dass sie entlang der Längsachse und zugleich der Führungshülsenlängsachse aufeinander rotationsfest steckbar sind und dabei eine Verbindung bilden, um durch die Führungshülse (2') hindurch ein Loch in die Fixierstifthalterung (1') bohren zu können, in das der Fixierstift (3) passt.

12. Fixierstifthalterung (1') mit dazu passender Führungshülse (2') gemäß Anspruch 11, wobei die Führungshülse (2') seitlich von der Führungshülsenlängsachse abstehend einen Haltearmgriff (28') aufweist, um die Führungshülse (2') manuell halten zu können.

13. Fixierstifthalterung (1') mit dazu passender Führungshülse (2') gemäß Anspruch 11 oder 12, wobei die Fixierstifthalterung (1') entlang der Längsachse eine erste Buchse (18') mit einer Bohrung (18a') aufweist und die erste Buchse (18') aus einem härteren Material als der Rest der Fixierstifthalterung (1') ist.

14. Fixierstifthalterung (1') mit dazu passender Führungshülse (2') gemäß einem oder mehreren der vorstehenden Ansprüche 11-13, wobei die Führungshülse (2') eine zweite Buchse (27') aufweist, die entlang der Führungshülsenlängsachse verläuft und entlang der Führungshülsenlängsachse einen Führungshülsenführungskanal (21') aufweist, der beidseitig nach oben und unten offen ist.

15. Fixierstifthalterung (1') mit dazu passender Führungshülse (2') gemäß einem oder mehreren der vorstehenden Ansprüche 11-14, wobei die Fixierstifthalterung (1') aus einem Kunststoff und die Führungshülse (2') aus einem Metall ausgebildet sind.

16. Fixierstifthalterung (1') mit dazu passender Führungshülse (2') gemäß einem oder mehreren der vorstehenden Ansprüche 11-15, wobei der Innenadapterabschnitt (22') und der Führungsabschnitt (1 1') so zueinander passend ausgebildet sind, dass sie nach einem aufeinander gesteckten Zustand wieder voneinander lösbar sind.

17. Fixierstifthalterung (1') mit dazu passender Führungshülse (2') gemäß einem oder mehreren der vorstehenden Ansprüche 11-16, wobei der Basisabschnitt (12') der Fixierstifthalterung (1') mit der Zahnprothese (4) integral verbunden ist oder darin eingegossen, eingeschraubt oder eingeklebt ist oder zusammen mit mindestens einem anderen Teil der Zahnprothese (4) zusammen aus einem Basismaterial ausgefräst oder ausgegossen ist.

18. Fixierstifthalterung (1') mit dazu passender Führungshülse (2') gemäß einem oder mehreren der vorstehenden Ansprüche 11-17, wobei die Fixierstifthalterung (1') eine obere Stirnfläche (14') mit einem ersten Winkel (W1') zur Längsachse aufweist, und wobei die Führungshülse (2') eine untere Stirnfläche (24') aufweist, die absatzartig zwischen dem Innenadapterabschnitt (22') und dem Führungskanal (21') mit einem zweiten Winkel (W2') zur Führungshülsenlängsachse gebildet ist, wobei die obere Stirnfläche (14') der Fixierstifthalterung (1') und die untere Stirnfläche (24') der Führungshülse (2') so zueinander ausgebildet sind, dass sie in dem aufeinander gesteckten Zustand der Führungshülse (2') auf der Fixierstifthalterung (1') aufeinander liegen und einen vorbestimmten Anschlag zueinander bilden.

19. Fixierstifthalterung (1') mit dazu passender Führungshülse (2') gemäß Anspruch 18, wobei der erste und der zweite Winkel zur Längsachse und zur Führungshülsenlängsachse ein rechter Winkel oder ein Winkel in einem Bereich von 60-90° oder von 30-60° ist.

20. Fixierstifthalterung (1') mit dazu passender Führungshülse (2') gemäß einem oder mehreren der vorstehenden Ansprüche 11-19, wobei die Fixierstifthalterung (1') und die Führungshülse (2') derart ausgebildet sind, um in dem aufeinander gesteckten Zustand sich ausschließlich durch die Bereiche des Führungsabschnitts (11') und des Innenadapterabschnitts (22') zu berühren.

21. Fixierstifthalterung (1') mit dazu passender Führungshülse (2') gemäß einem oder mehreren der vorstehenden Ansprüche 11-20, wobei der Querschnitt des Führungsabschnitts (11') und der Innenadapterquerschnitt um die Längsachse und Führungshülsenlängsachse quadratisch, hexagonal, oval, sternförmig, vieleckig oder vieleckig ausgebildet sind, um eine Verdrehsicherung zwischen der Fixierstifthalterung (1) und der Führungshülse (2) zu bilden.

22. Fixierstifthalterung (1') mit dazu passender Führungshülse (2') gemäß Anspruch 21, wobei der Querschnitt des Führungsabschnitts (11') und der Innenadapterquerschnitt um die Längsachse und Führungshülsenlängsachse mit gerundeten Ecken ausgebildet sind.

23. Verfahren zur Herstellung eines Lochs in einer Fixierstifthalterung (1), die in einer Zahnprothese (4) integrierbar ist, folgende Schritte umfassend:
a) Bereitstellen der Fixierstifthalterung (1), die dazu ausgebildet ist, in der Zahnprothese (4) integrierbar zu sein und um nach einem optionalen Nachbearbeitungsschritt einer Aufnahme eines entsprechenden Fixierstifts (3) zu dienen, der im Mund eines Patienten durch die Fixierstifthalterung (1) hindurch in den Kiefer hinein bewegbar ist, um die Zahnprothese (4) mit dem Kiefer zu verbinden, wobei die Fixierstifthalterung (1) einen Basisabschnitt (12) und einen Außenadapterabschnitt (11) aufweist und der Außenadapterabschnitt (11) entlang einer Längsachse mit einem Außenadapterquerschnitt und einer Außenadapterlänge sich nach außen vom Kiefer weg erstreckt;
b) Bereitstellen einer Führungshülse (2), die entlang einer Führungshülsenlängsachse als ein längliches hülsenartiges Teil mit einem inneren Führungskanal (21), der beidseitig nach außen offen ist, ausgebildet ist und an einem ersten Ende (20) entlang der Führungshülsenlängsachse einen inneren becherartigen Innenadapterabschnitt (22) aufweist, der aufsteckbar passend zum Außeradapterabschnitt (11) ausgebildet ist;
c) Integration der mindestens einen Fixierstifthalterung (1) in der Zahnprothese (4);
d) Aufstecken der Führungshülse (2) auf die Fixierstifthalterung (1) bis zu einem vorbestimmten Anschlag zwischen der Führungshülse (2) und der Fixierstifthalterung (1);
e) optionales Einführen eines Bohrers durch den inneren Führungskanal (21) der Führungshülse (2) und Bohren einer Führungsbohrung durch die Fixierstifthalterung (1) als dem Nachbearbeitungsschritt, um durch die Führungsbohrung ein nachfolgendes Hindurchbewegen des Fixierstifts (3) zu ermöglichen;
f) Nach dem Bohren der Führungsbohrung, Abziehen der Führungshülse (2) von der Fixierstifthalterung (1);
g) Nach einer Anpassung der Zahnprothese (4) und Entnehmen aus dem Mund des Patienten: Entfernen mindestens des seitlich nach außen abstehenden Außenadapterabschnitts (12) der Fixierstifthalterung (1).

24. Verfahren zur Herstellung eines Lochs in einer Fixierstifthalterung (1), die in einer Zahnprothese (4) integriert ist, folgende Schritte umfassend:
a) Herstellen der Zahnprothese (4) mit der darin eingegossenen oder ausgefrästen Fixierstifthalterung (1), die dazu ausgebildet ist, nach einem Nachbearbeitungsschritt einer Aufnahme eines entsprechenden Fixierstifts (3) zu dienen, der im Mund eines Patienten durch die Fixierstifthalterung (1) hindurch in den Kiefer schiebbar ist, um die Zahnprothese (4) mit dem Kiefer zu verbinden, wobei die Fixierstifthalterung (1) einen Basisabschnitt (12) und einen Außenadapterabschnitt (11) aufweist und der Außenadapterabschnitt (11) entlang einer Längsachse mit einem Außenadapterquerschnitt und einer Außenadapterlänge sich nach außen vom Kiefer weg erstreckt;
b) Bereitstellen einer Führungshülse (2), die entlang einer Führungshülsenlängsachse als ein längliches hülsenartiges Teil mit einem inneren Führungskanal (21), der beidseitig nach außen offen ist, ausgebildet ist und an einem ersten Ende (20) entlang der Führungshülsenlängsachse einen inneren becherartigen Innenadapterabschnitt (22) aufweist, der aufsteckbar passend zum Außeradapterabschnitt (11) ausgebildet ist;
c) Aufstecken der Führungshülse (2) auf die Fixierstifthalterung (1) bis zu einem vorbestimmten Anschlag zwischen der jeweiligen Führungshülse (2) und der Fixierstifthalterung (1);
d) optionales Einführen eines Bohrers durch den inneren Führungskanal (21) der Führungshülse (2) und Bohren einer Führungsbohrung durch die Fixierstifthalterung (1) als dem Nachbearbeitungsschritt, um durch die Führungsbohrung ein nachfolgendes Hindurchbewegen des Fixierstifts (3) zu ermöglichen;
e) Nach dem Bohren der Führungsbohrung, Abziehen der Führungshülse (2) von der Fixierstifthalterung (1);
f) Nach einer Anpassung der Zahnprothese (4) und Entnehmen aus dem Mund des Patienten: Entfernen mindestens der seitlich nach außen abstehenden Außenadapterabschnitte (12) der Fixierstifthalterung (1).

25. Verfahren zur Herstellung eines Lochs in einer Fixierstifthalterung (1'), die in einer Zahnprothese (4') integrierbar ist, folgende Schritte umfassend:
a) Bereitstellen der Fixierstifthalterung (1'), die dazu ausgebildet ist, in der Zahnprothese (4') integrierbar zu sein und um einer Aufnahme eines entsprechenden Fixierstifts (3) zu dienen, der im Mund eines Patienten durch die Fixierstifthalterung (1') hindurch in den Kiefer hinein bewegbar ist, um die Zahnprothese (4') mit dem Kiefer zu verbinden, wobei die Fixierstifthalterung (1') einen Basisabschnitt (12') und einen Führungsabschnitt (11') aufweist und wobei sich der Führungsabschnitt (1 1') entlang seiner Längsachse mit einer Führungsfläche (11a') und mit einer Führungsabschnittslänge entlang der Längsachse nach außen vom Kiefer weg erstreckt;
b) Bereitstellen einer Führungshülse (2'), die entlang einer Führungshülsenlängsachse als ein längliches hülsenartiges Teil mit einem inneren Führungskanal (21'), der beidseitig nach außen offen ist, ausgebildet ist und entlang der Führungshülsenlängsachse einen inneren becherartigen Innenadapterabschnitt (22') aufweist, der aufsteckbar passend zum Führungsabschnitt (11') ausgebildet ist, um den Führungsabschnitt (1 1') rotationsfest mit der Führungshülse (2') zu verbinden;
c) Integration der mindestens einen Fixierstifthalterung (1') in der Zahnprothese (4');
d) Aufstecken der Führungshülse (2') auf die Fixierstifthalterung (1') bis zu einem vorbestimmten Anschlag zwischen der Führungshülse (2') und der Fixierstifthalterung (1');
e) Optionales Einführen eines Bohrers durch den inneren Führungskanal (21') der Führungshülse (2') und Bohren einer Führungsbohrung durch die Fixierstifthalterung (1'), um durch die Führungsbohrung ein nachfolgendes Hindurchbewegen des Fixierstifts (3) zu ermöglichen;
f) Nach dem Bohren der Führungsbohrung, Abziehen der Führungshülse (2') von der Fixierstifthalterung (1');
g) Nach einer Anpassung der Zahnprothese (4) und Entnehmen aus dem Mund des Patienten: Entfernen mindestens des seitlich nach außen abstehenden Führungsabschnitts (11') der Fixierstifthalterung (1').

26. Verfahren zur Herstellung eines Lochs in einer Fixierstifthalterung (1'), die in einer Zahnprothese (4) integriert ist, folgende Schritte umfassend:
a) Herstellen der Zahnprothese (4) mit der darin eingegossenen oder ausgefrästen Fixierstifthalterung (1'), die dazu ausgebildet ist, einer Aufnahme eines entsprechenden Fixierstifts (3) zu dienen, der im Mund eines Patienten durch die Fixierstifthalterung (1') hindurch in den Kiefer schiebbar ist, um die Zahnprothese (4) mit dem Kiefer zu verbinden, wobei die Fixierstifthalterung (1') einen Basisabschnitt (12') und einen Führungsabschnitt (11') aufweist und wobei sich der Führungsabschnitt (11') entlang seiner Längsachse mit einer Führungsfläche (11a') und mit einer Führungsabschnittslänge entlang der Längsachse nach außen vom Kiefer weg erstreckt;
b) Bereitstellen einer Führungshülse (2), die entlang einer Führungshülsenlängsachse als ein längliches hülsenartiges Teil mit einem inneren Führungskanal (21), der beidseitig nach außen offen ist, ausgebildet ist und die entlang der Führungshülsenlängsachse einen inneren becherartigen Innenadapterabschnitt (22') aufweist, der aufsteckbar passend zum Außeradapterabschnitt (11') ausgebildet ist, um den Führungsabschnitt (11') rotationsfest mit der Führungshülse (2') zu verbinden;
c) Aufstecken der Führungshülse (2') auf die Fixierstifthalterung (1') bis zu einem vorbestimmten Anschlag zwischen der Führungshülse (2') und der Fixierstifthalterung (1);
d) Optionales Einführen eines Bohrers durch den inneren Führungskanal (21') der Führungshülse (2') und Bohren einer Führungsbohrung durch die Fixierstifthalterung (1'), um durch die Führungsbohrung ein nachfolgendes Hindurchbewegen des Fixierstifts (3) zu ermöglichen;
e) Nach dem Bohren der Führungsbohrung, Abziehen der Führungshülse (2') von der Fixierstifthalterung (1');
f) Nach einer Anpassung der Zahnprothese (4) und Entnehmen aus dem Mund des Patienten: Entfernen mindestens des seitlich nach außen abstehenden Führungsabschnitts (1 1') der Fixierstifthalterung (1').

## Claims

1. Fixation pin support (1) with matching guide sleeve (2), the fixation pin support (1) being adapted to be able to be integrated or to be integrated in a dental prosthesis (4) so as to be able to be connected to a jaw of a patient along its longitudinal axis via a respective fixation pin (3), the jaw having holes drilled previously into which the fixation pin (3) slidable through the fixation pin support (1) can protrude in order to temporarily anchor the dental prosthesis (4) to the jaw, the fixation pin support (1) comprising:
a) a base portion (12) adapted to be integrally connectable to the dental prosthesis (4) or made in one piece with the dental prosthesis (4);
b) the guide sleeve (2) being formed longitudinal along a guide sleeve longitudinal axis and sleeve-like with an inner guide channel (21) which is open to the outside on both sides;
**characterized in that**
c) the base portion (12) has an outer adapter portion (11) integrally connected to it which extends along the longitudinal axis with an outer adapter length from the base portion (12) to an outer end (16) with an outer adapter cross-section, the outer end (16) of the outer adapter portion (11) at the dental prosthesis (4) being directed outwards away from the patient;
d) the guide sleeve (2) having, at a first end (20) along the guide sleeve longitudinal axis, an interior cup-shaped inner adapter portion (22) with an inner adapter length and an inner adapter cross-section; and
e) the inner adapter portion (22) with the inner adapter length and the inner adapter cross-section and the outer adapter portion (11) with the outer adapter length and the outer adapter cross-section being formed matching each other so as to be pluggable onto each other, forming a connection stable enough to be able to drill, with a predefined tolerance, a hole through the guide sleeve (2) into the fixation pin support (1) which hole the fixation pin (3) fits into.

2. Fixation pin support (1) with matching guide sleeve (2) according to Claim 1, the fixation pin support (1) being formed from a plastic and the guide sleeve (2) being formed from a metal, and the fixation pin support (1) having a first bushing with a bore along the longitudinal axis and the first bushing being made of a more rigid material than the rest of the fixation pin support (1).

3. Fixation pin support (1) with matching guide sleeve (2) according to Claim 1 or 2, the inner adapter portion (22) and the outer adapter portion (11) being formed matching each other so that they are releasable from one another after a plugged-together state.

4. Fixation pin support (1) with matching guide sleeve (2) according to one or more of the above Claims, the base portion (12) of the fixation pin support (1) being integrally connected with the dental prosthesis (4) or cast, screwed or adhesively bonded into it or being milled or cast from a basic material together with at least one other part of the dental prosthesis (4).

5. Fixation pin support (1) with matching guide sleeve (2) according to one or more of the above Claims, the fixation pin support (1) having on the base portion (12), which extends in an annular manner around the outer adapter portion (11) which extends out of the base portion (12), a first end face (13) with a first angle to the longitudinal axis, and the guide sleeve (2) having a third end face (23) annular around the guide sleeve longitudinal axis, which end face is formed on the first end (20) of the guide sleeve (2) between a second surface area (26) and the inner adapter portion (22) with the first angle to the guide sleeve longitudinal axis, the first end face (13) and the third end face (23) being formed with respect to each other such that in the plugged-together state of the guide sleeve (2) and the fixation pin support (1), they rest on one another, forming a predefined stop with respect to each other.

6. Fixation pin support (1) with matching guide sleeve (2) according to Claim 5, the guide sleeve (2) having at its first end (20) a recess (25) formed in an annular manner around the guide sleeve longitudinal axis between the third end face (23) and the inner adapter portion (22) such that the recess enlarges an outer boundary portion of the inner adapter portion (22) at the first end (20) by a recess width, so that in the plugged-together state of the guide sleeve (2) and the fixation pin support (1), the recess (25) has a cavity with an annular width and a depth along the guide sleeve longitudinal axis which is less than the inner adapter length.

7. Fixation pin support (1) with matching guide sleeve (2) according to one or more of the above Claims, the fixation pin support (1) having, at the outer end (16) of the outer adapter portion (11), a second end face (14) with a second angle to the longitudinal axis, and the guide sleeve (2) having a fourth end face (24) which is formed like a step between the inner adapter portion (22) and the guide channel (21) with the second angle to the guide sleeve longitudinal axis, the second end face (14) and the fourth end face (24) being formed such with respect to each other that in the plugged-together state of the guide sleeve (2) and the fixation pin support (1), they rest on one another, forming a predefined stop with respect to each other.

8. Fixation pin support (1) with matching guide sleeve (2) according to one or more of the above Claims, the first angle to the longitudinal axis and to the guide sleeve longitudinal axis being a right angle or an angle within a range of 60-90°; and/or
the second angle to the longitudinal axis and to the guide sleeve longitudinal axis being a right angle or an angle within a range of 60-90° or 30-60°.

9. Fixation pin support (1) with matching guide sleeve (2) according to one or more of the above Claims, the fixation pin support (1) and the guide sleeve (2) being adapted to contact each other, in the plugged-together state, exclusively at the areas of the outer adapter portion (11), the inner adapter portion (22) and/or at the first (13), the second (14), the third (23) and/or the fourth end face (24).

10. Fixation pin support (1) with matching guide sleeve (2) according to one or more of the above Claims, the outer adapter cross-section and accordingly the inner adapter cross-section being formed about the longitudinal axis and the guide sleeve longitudinal axis secure against rotation with respect to each other or square, oval, star-shaped, polygonal or polygonal with rounded corners, so as to form a protection against rotation between the fixation pin support (1) and the guide sleeve (2).

11. Fixation pin support (1') with matching guide sleeve (2'), the fixation pin support (1') being adapted to be able to be integrated or to be integrated in a dental prosthesis (4) so as to be able to be connected to a jaw of a patient along its longitudinal axis via a respective fixation pin (3), the jaw having holes drilled previously into which the fixation pin (3) slidable through the fixation pin support (1') can protrude in order to temporarily anchor the dental prosthesis (4) to the jaw, the fixation pin support (1') comprising:
a) a guide portion (11') which extends along the longitudinal axis and surrounds it on all sides, the guide portion (11') having at least one guide surface (11a') and one guide portion length along the longitudinal axis; and
b) a base portion (12') connected integrally or in one piece with the guide portion (11') and extending laterally away from the guide portion (11') outside the guide surface (11a'), the base portion (12') being integrally connectable or made in one piece with the dental prosthesis (4);
c) the guide sleeve (2') being formed longitudinal along a guide sleeve longitudinal axis and sleeve-like with an inner guide channel (21') which is open to the outside on both sides and has in one portion along the guide sleeve longitudinal axis an interior cup-shaped inner adapter portion (22') with an inner adapter length and an inner adapter cross-section;
d) the inner adapter portion (22') with the inner adapter length and the inner adapter cross-section and the guide portion (11') with the guide surface (11a') and the guide portion length being formed matching each other such that they can be plugged onto each other securely against rotation along the longitudinal axis and at the same time along the guide sleeve longitudinal axis, forming a connection so as to be able to drill a hole into the fixation pin support (1') through the guide sleeve (2'), which hole the fixation pin (3) fits into.

12. Fixation pin support (1') with matching guide sleeve (2') according to Claim 11, the guide sleeve (2') having a support arm handle (28') extending laterally from the guide sleeve longitudinal axis so that the guide sleeve (2') can be retained manually.

13. Fixation pin support (1') with matching guide sleeve (2') according to Claim 11 or 12, the fixation pin support (1') having a first bushing (18') with a bore (18a') along the longitudinal axis and the first bushing (18') being made of a more rigid material than the rest of the fixation pin support (1').

14. Fixation pin support (1') with matching guide sleeve (2') according to one or more of the above Claims 11-13, the guide sleeve (2') having a second bushing (27') which extends along the guide sleeve longitudinal axis and has a guide sleeve guide channel (21') along the guide sleeve longitudinal axis which is open towards the top and towards the bottom on both sides.

15. Fixation pin support (1') with matching guide sleeve (2') according to one or more of the above Claims 11-14, the fixation pin support (1') being made of a plastic and the guide sleeve (2') being made of a metal.

16. Fixation pin support (1') with matching guide sleeve (2') according to one or more of the above Claims 11-15, the inner adapter portion (22') and the guide portion (11') being formed matching each other such that they are releasable from one another after a plugged-together state.

17. Fixation pin support (1') with matching guide sleeve (2') according to one or more of the above Claims 11-16, the base portion (12') of the fixation pin support (1') being integrally connected with the dental prosthesis (4) or cast, screwed or adhesively bonded into it or being routed or cast from a basic material together with at least one other part of the dental prosthesis (4).

18. Fixation pin support (1') with matching guide sleeve (2') according to one or more of the above Claims 11-17, the fixation pin support (1') having an upper end face (14') with a first angle (W1') to the longitudinal axis and the guide sleeve (2') having a lower end face (24') which is formed like a step between the inner adapter portion (22') and the guide channel (21') at a second angle (W2') to the guide sleeve longitudinal axis, the upper end face (14') of the fixation pin support (1') and the lower end face (24') of the guide sleeve (2') being formed such with respect to each other that in the plugged-together state of the guide sleeve (2') and the fixation pin support (1'), they rest on one another, forming a predefined stop with respect to each other.

19. Fixation pin support (1') with matching guide sleeve (2') according to Claim 18, the first angle and the second angle to the longitudinal axis and to the guide sleeve longitudinal axis being a right angle or an angle within a range of 60-90° or 30-60°.

20. Fixation pin support (1') with matching guide sleeve (2') according to one or more of the above Claims 11-19, the fixation pin support (1') and the guide sleeve (2') being formed so as to contact each other, in the plugged-together state, exclusively in the areas of the guide portion (11') and of the inner adapter portion (22').

21. Fixation pin support (1') with matching guide sleeve (2') according to one or more of the above Claims 11-20, the cross-section of the guide portion (11') and the inner adapter cross-section being formed about the longitudinal axis and the guide-sleeve longitudinal axis to be square, hexagonal, oval, star-shaped, polygonal or polygonal, so as to form a protection against rotation between the fixation pin support (1) and the guide sleeve (2).

22. Fixation pin support (1') with matching guide sleeve (2') according to Claim 21, the cross-section of the guide portion (11') and the inner adapter cross-section being formed with rounded corners about the longitudinal axis and the guide-sleeve longitudinal axis.

23. Method of producing a hole in a fixation pin support (1) which can be integrated in a dental prosthesis (4), comprising the following steps:
a) providing the fixation pin support (1) adapted to be able to be integrated in a dental prosthesis (4) and to be used, after an optional finishing step, for receiving a respective fixation pin (3) which is movable in the mouth of a patient into the jaw through the fixation pin support (1) in order to connect the dental prosthesis (4) to the jaw, the fixation pin support (1) having a base portion (12) and an outer adapter portion (11) and the outer adapter portion (11) extending outwardly away from the jaw along a longitudinal axis with an outer adapter cross-section and an outer adapter length;
b) providing a guide sleeve (2) formed along a guide sleeve longitudinal axis as a longitudinal sleeve-like part with an inner guide channel (21) open to the outside on both sides, the guide sleeve having at a first end (20) along the guide sleeve longitudinal axis an interior cup-shaped inner adapter portion (22) formed so as to fit together, so as to be plugged upon it, with the outer adapter portion (11);
c) integrating the at least one fixation pin support (1) in the dental prosthesis (4);
d) plugging the guide sleeve (2) onto the fixation pin support (1) up to a predefined stop between the guide sleeve (2) and the fixation pin support (1);
e) optionally inserting a drill through the inner guide channel (21) of the guide sleeve (2) and drilling a guide bore through the fixation pin support (1) as the finishing step so as to allow subsequent passage of the fixation pin (3) through the guide bore;
f) after drilling the guide bore, removing the guide sleeve (2) from the fixation pin support (1);
g) after adjustment of the dental prosthesis (4) and removal from the mouth of the patient: removal of at least the laterally outwardly extending outer adapter portion (12) of the fixation pin support (1).

24. Method of producing a hole in a fixation pin support (1) integrated in a dental prosthesis (4), comprising the following steps:
a) producing the dental prosthesis (4) with the fixation pin support (1) cast or routed therein which is adapted to be used, after a finishing step, for receiving a respective fixation pin (3) which is slidable into the jaw in the mouth of a patient through the fixation pin support (1) so as to connect the dental prosthesis (4) to the jaw, the fixation pin support (1) having a base portion (12) and an outer adapter portion (11) and the outer adapter portion (11) extending outwards away from the jaw along a longitudinal axis with an outer adapter cross-section and an outer adapter length;
b) providing a guide sleeve (2) formed along a guide sleeve longitudinal axis as a longitudinal sleeve-like part with an inner guide channel (21) which is open to the outside on both sides and has, at a first end (20) along the guide sleeve longitudinal axis, an interior cup-shaped inner adapter portion (22), which is formed matching the outer adapter portion (11) so as to be pluggable onto it;
c) plugging the guide sleeve (2) onto the fixation pin support (1) up to a predefined stop between the respective guide sleeve (2) and the fixation pin support (1);
d) optionally inserting a drill through the inner guide channel (21) of the guide sleeve (2) and drilling a guide bore through the fixation pin support (1) as the finishing step so as to allow subsequent passage of the fixation pin (3) through the guide bore;
e) after drilling of the guide bore, removing the guide sleeve (2) from the fixation pin support (1);
f) after adjusting the dental prosthesis (4) and removal from the mouth of the patient: removing at least the outer adapter portions (12) of the fixation pin support (1) which extend laterally outwards.

25. Method of producing a hole in a fixation pin support (1') which can be integrated in a dental prosthesis (4'), comprising the following steps:
a) providing the fixation pin support (1') adapted to be able to be integrated in the dental prosthesis (4') and to be used for receiving a respective fixation pin (3) movable in the mouth of a patient into the jaw through the fixation pin support (1') so as to connect the dental prosthesis (4') to the jaw, the fixation pin support (1') having a base portion (12') and a guide portion (11') and the guide portion (11') extending along its longitudinal axis with a guide surface (11a') and with a guide portion length along the longitudinal axis outwardly away from the jaw;
b) providing a guide sleeve (2') formed along a guide sleeve longitudinal axis as a longitudinal sleeve-like part with an inner guide channel (21') which is open on both sides to the outside and has, along the guide sleeve longitudinal axis, an interior cup-shaped inner adapter portion (22') formed matching the guide portion (11') so as to be pluggable onto it and connect the guide portion (11') rotationally secure to the guide sleeve (2');
c) integrating the at least one fixation pin support (1') into the dental prosthesis (4');
d) plugging the guide sleeve (2') onto the fixation pin support (1') up to a predefined stop between the guide sleeve (2') and the fixation pin support (1');
e) optionally inserting a drill through the inner guide channel (21') of the guide sleeve (2') and drilling a guide bore through the fixation pin support (1') so as to allow subsequent passage of the fixation pin (3) through the guide bore;
f) after drilling of the guide bore, removing the guide sleeve (2') from the fixation pin support (1');
g) after adjustment of the dental prosthesis (4) and removal from the mouth of the patient: removal of at least the guide portion (11') of the fixation pin support (1') which extends laterally outwards.

26. Method of producing a hole in a fixation pin support (1') integrated in a dental prosthesis (4), comprising the following steps:
a) producing the dental prosthesis (4) with the fixation pin support (1') cast or routed therein, adapted to be used for receiving a respective fixation pin (3) slidable in the mouth of a patient into the jaw through the fixation pin support (1') so as to connect the dental prosthesis (4) to the jaw, the fixation pin support (1') having a base portion (12') and a guide portion (11') and the guide portion (11') extending outwardly away from the jaw along its longitudinal axis with a guide surface (11a') and with a guide portion length along the longitudinal axis;
b) providing a guide sleeve (2) formed along a guide sleeve longitudinal axis as a longitudinal sleeve-like part with an inner guide channel (21) which is open to the outside on both sides and which has an interior cup-shaped inner adapter portion (22') along the guide sleeve longitudinal axis, which inner adapter portion is formed matching the outer adapter portion (11') so as to be pluggable onto it, in order to connect the guide portion (11') in a rotationally secure manner with the guide sleeve (2');
c) plugging the guide sleeve (2') onto the fixation pin support (1') up to a predefined stop between the guide sleeve (2') and the fixation pin support (1);
d) optionally inserting a drill through the inner guide channel (21') of the guide sleeve (2') and drilling a guide bore through the fixation pin support (1') so as to allow subsequent passage of the fixation pin (3) through the guide bore;
e) after drilling the guide bore, removing the guide sleeve (2') from the fixation pin support (1');
f) after adjustment of the dental prosthesis (4) and removal from the mouth of the patient: removal of at least the guide portion (11') of the fixation pin support (1') which extends laterally outwards.

## Revendications

1. Support de broche de fixation (1) avec douille de guidage (2) correspondante, le support de broche de fixation (1) étant formé pour être intégré ou pour pouvoir être intégré dans une prothèse dentaire (4), afin de pouvoir le fixer le long de son axe longitudinal, au moyen d'une broche de fixation (3) correspondante, à une mâchoire d'un patient, comportant des trous pré-percés dans lesquels la broche de fixation (3), qui peut coulisser à travers le support de broche de fixation (1), peut faire saillie afin d'ancrer ainsi temporairement la prothèse dentaire (4) dans la mâchoire, le support de broche de fixation (1) comportant :
a) une portion de base (12) formée pour pouvoir être reliée à la prothèse dentaire (4) d'un seul tenant ou faisant partie intégrante de la prothèse dentaire (4),
b) la douille de guidage (2) étant formée de manière longitudinale et analogue à une douille le long d'un axe longitudinal de douille de guidage avec un canal de guidage intérieur (21) qui est ouvert vers l'extérieur des deux côtés,
**caractérisé en ce que**
c) la portion de base (12) comporte une portion d'adaptateur extérieur (11) reliée d'un seul tenant à celle-ci, qui s'étend le long de l'axe longitudinal à partir de la portion de base (12) avec une longueur d'adaptateur extérieur jusqu'à une extrémité extérieure (16) avec une section d'adaptateur extérieur, l'extrémité extérieure (16) de la portion d'adaptateur extérieur (11) sur la prothèse dentaire (4) étant dirigée vers l'extérieur en s'éloignant du patient,
d) la douille de guidage (2) comporte, à une première extrémité (20) le long de l'axe longitudinal de douille de guidage, une portion intérieure d'adaptateur intérieur en forme de cuvette (22) avec une longueur d'adaptateur intérieur et une section d'adaptateur intérieur, et
e) la partie d'adaptateur intérieur (22) avec la longueur d'adaptateur intérieur et la section d'adaptateur intérieur et la portion d'adaptateur extérieur (11) avec la longueur d'adaptateur extérieur et la section d'adaptateur extérieur sont formées de manière à correspondre l'une avec l'autre, de telle sorte qu'elles peuvent être emboîtées l'une sur l'autre et forment ainsi une liaison qui est suffisamment stable pour pouvoir percer un trou dans le support de broche de fixation (1) avec une tolérance prédéfinie à travers la douille de guidage (2), la broche de fixation (3) étant ajustée dans le trou.

2. Support de broche de fixation (1) avec douille de guidage (2) correspondante selon la revendication 1, le support de broche de fixation (1) étant formé à partir d'une matière plastique et la broche **de** guidage (2) étant formée à partir d'un métal et/ou **le** support de broche de fixation (1) comportant un premier manchon avec un alésage le long de l'axe longitudinal et le premier manchon étant constitué d'un matériau plus dur que le reste du support de broche de fixation (1).

3. Support de broche de fixation (1) avec douille de guidage (2) correspondante selon la revendication 1 ou 2, la portion d'adaptateur intérieur (22) et la portion d'adaptateur extérieur (11) étant formées de manière à correspondre l'une avec l'autre, de telle sorte qu'elles peuvent être de nouveau séparées l'une de l'autre après avoir été emboîtées l'une sur l'autre.

4. Support de broche de fixation (1) avec douille de guidage (2) correspondante selon une ou plusieurs des revendications précédentes, la portion de base (12) du support de broche de fixation (1) étant reliée d'un seul tenant à la prothèse dentaire (4) ou moulée, vissée ou collée dans celle-ci ou fraisée ou moulée en association avec au moins une autre partie de la prothèse dentaire (4) à partir d'un matériau de base.

5. Support de broche de fixation (1) avec douille de guidage (2) correspondante selon une ou plusieurs des revendications précédentes, le support de broche de fixation (1) comportant, au niveau de la portion de base (12), de manière annulaire autour de la portion d'adaptateur extérieur (11) qui s'étend à partir de la portion de base (12), une première face frontale (13) avec un premier angle par rapport à l'axe longitudinal, et la douille de guidage (2) comportant une troisième face frontale annulaire (23) autour de l'axe longitudinal de douille de guidage, qui est formée sur la première extrémité (20) de la douille de guidage (2) entre une seconde surface latérale (26) et la portion d'adaptateur intérieur (22) avec un premier angle par rapport à l'axe longitudinal de douille de guidage, la première face frontale (13) et la troisième face frontale (23) étant formées l'une par rapport à l'autre de telle sorte qu'elles sont en appui l'une sur l'autre lorsque la douille de guidage (2) et le support de broche de fixation (1) sont emboîtés l'un sur l'autre et forment une butée prédéfinie l'un par rapport à l'autre.

6. Support de broche de fixation (1) avec douille de guidage (2) correspondante selon la revendication 5, la douille de guidage (2) comportant, au niveau de la première extrémité (20), un évidement (25) qui est formé de manière annulaire autour de l'axe longitudinal de douille de guidage entre la troisième face frontale (23) et la portion d'adaptateur intérieur (22), de telle sorte que l'évidement élargit d'une largeur d'évidement une zone de rebord extérieure de la portion d'adaptateur intérieur (22) au niveau de la première extrémité (20), de telle sorte que l'évidement (25) forme, lorsque la douille de guidage (2) est emboîtée sur le support de broche de fixation (1), une cavité avec une largeur annulaire et une profondeur le long de l'axe longitudinal de douille de guidage qui est plus petite que la longueur d'adaptateur intérieur.

7. Support de broche de fixation (1) avec douille de guidage (2) correspondante selon une ou plusieurs des revendications précédentes, le support de broche de fixation (1) comportant, au niveau de l'extrémité extérieure (16) de la portion d'adaptateur extérieur (11), une deuxième face frontale (14) avec un second angle par rapport à l'axe longitudinal, et la douille de guidage (2) comportant une quatrième face frontale (24) qui est formée comme un épaulement entre la portion d'adaptateur intérieur (22) et le canal de guidage (21) avec le second angle par rapport à l'axe longitudinal de douille de guidage, la deuxième face frontale (14) et la quatrième face frontale (24) étant formées l'une par rapport à l'autre, de telle sorte qu'elle sont en appui l'une sur l'autre lorsque la douille de guidage (2) et le support de broche de fixation (1) sont emboîtés l'un sur l'autre et forment une butée prédéfinie l'un par rapport à l'autre.

8. Support de broche de fixation (1) avec douille de guidage (2) correspondante selon une ou plusieurs des revendications précédentes, le premier angle par rapport à l'axe longitudinal et par rapport à l'axe longitudinal de douille de guidage étant un angle droit ou un angle dans une plage de 60 à 90°, et/ou
le second angle par rapport à l'axe longitudinal et par rapport à l'axe longitudinal de douille de guidage étant un angle droit ou un angle dans une plage de 60 à 90° ou de 30 à 60°.

9. Support de broche de fixation (1) avec douille de guidage (2) correspondante selon une ou plusieurs des revendications précédentes, le support de broche de fixation (1) et la douille de guidage (2) étant formés, lorsqu'ils sont emboîtés l'un sur l'autre, de manière à venir en contact exclusivement au niveau des zones de la portion d'adaptateur extérieur (11), de la portion d'adaptateur intérieur (22) et/ou au niveau de la première (13), deuxième (14), troisième (23) et/ou quatrième (24) face frontale.

10. Support de broche de fixation (1) avec douille de guidage (2) correspondante selon une ou plusieurs des revendications précédentes, la portion d'adaptateur extérieur et, par conséquent, la portion d'adaptateur intérieur étant formées de manière mutuellement bloquée en rotation autour de l'axe longitudinal et de l'axe longitudinal de douille de guidage, ou de forme carrée, ovale, en étoile, polygonale ou polygonale avec des coins arrondis, afin d'entraîner un blocage en rotation entre le support de broche de fixation (1) et la douille de guidage (2).

11. Support de broche de fixation (1') avec douille de guidage (2') correspondante, le support de broche de fixation (1') étant formé pour être intégré ou pour pouvoir être intégré dans une prothèse dentaire (4), afin de pouvoir le fixer le long de son axe longitudinal, au moyen d'une broche de fixation (3) correspondante, à une mâchoire d'un patient, comportant des trous pré-percés dans lesquels la broche de fixation (3), qui peut coulisser à travers le support de broche de fixation (1'), peut faire saillie afin d'ancrer ainsi temporairement la prothèse dentaire (4) dans la mâchoire, le support de broche de fixation (1') comportant :
a) une portion de guidage (11') qui s'étend le long de l'axe longitudinal et entoure celui-ci de tous les côtés, la portion de guidage (11') comportant au moins une surface de guidage (11a') et a une longueur de portion de guidage le long de l'axe longitudinal, et
b) une portion de base (12') reliée d'un seul tenant ou faisant partie intégrante de la portion de guidage (11') et qui s'étend à l'extérieur de la surface de guidage (11a') latéralement par rapport à la portion de guidage (11'), la portion de base (12) pouvant être reliée d'un seul tenant à la prothèse dentaire (4) ou faisant partie intégrante de la prothèse dentaire (4),
c) la douille de guidage (2') étant formée de manière longitudinale et analogue à une douille le long d'un axe longitudinal de douille de guidage avec un canal de guidage intérieur (21') qui est ouvert vers l'extérieur des deux côtés, la douille de guidage comportant, dans une portion le long de l'axe longitudinal de guidage de douille, une portion intérieure d'adaptateur intérieur en forme de cuvette (22') avec une section d'adaptateur intérieur et une longueur d'adaptateur intérieur,
d) la portion d'adaptateur intérieur (22') avec la longueur d'adaptateur intérieur et la section d'adaptateur intérieur et la portion de guidage (11') avec la surface de guidage (11a') et la longueur de portion de guidage étant formées de manière à correspondre l'une avec l'autre, de telle sorte qu'elle peuvent être emboîtées l'une sur l'autre de manière bloquée en rotation le long de l'axe longitudinal et simultanément le long de l'axe longitudinal de douille de guidage, en formant ainsi une liaison afin de pouvoir percer un trou dans le support de broche de fixation (1') à travers la douille de fixation (2), la broche fixation (3) étant ajustée dans le trou.

12. Support de broche de fixation (1') avec douille de guidage (2') correspondante selon la revendication 11, la douille de guidage (2') comportant une poignée de bras de support (28') faisant latéralement saillie à partir de l'axe longitudinal de douille de guidage, afin de pouvoir maintenir manuellement la douille de guidage (2').

13. Support de broche de fixation (1') avec douille de guidage (2') correspondante selon la revendication 11 ou 12, le support de broche de fixation (1') comportant un premier manchon (18') avec un alésage (18a') le long de l'axe longitudinal et le premier manchon (18') étant constitué d'un matériau plus dur que le reste du support de broche de fixation (1').

14. Support de broche de fixation (1') avec douille de guidage (2') correspondante selon une ou plusieurs des revendications 11 à 13 précédentes, la douille de guidage (2') comportant un second manchon (27') qui s'étend le long de l'axe longitudinal de douille de guidage et comporte, le long de l'axe longitudinal de douille de guidage, un canal de guidage de douille de guidage (21') qui est ouvert des deux côtés vers le haut et vers le bas.

15. Support de broche de fixation (1') avec douille de guidage (2') correspondante selon une ou plusieurs des revendications 11 à 14 précédentes, le support de broche de fixation (1') étant constitué d'une matière plastique et la douille de guidage (2') étant constituée d'un métal.

16. Support de broche de fixation (1') avec douille de guidage (2') correspondante selon une ou plusieurs des revendications 11 à 15 précédentes, la portion d'adaptateur intérieur (22') et la portion d'adaptateur extérieur (11') étant formées de manière à correspondre l'une avec l'autre, de telle sorte qu'elles peuvent être de nouveau séparées l'une de l'autre après avoir été emboîtées l'une sur l'autre.

17. Support de broche de fixation (1') avec douille de guidage (2') correspondante selon une ou plusieurs des revendications 11 à 16 précédentes, la portion de base (12') du support de broche de fixation (1') étant reliée d'un seul tenant à la prothèse dentaire (4) ou étant moulée, vissée ou collée dans celle-ci ou fraisée ou moulée en association avec au moins une autre partie de la prothèse dentaire (4) à partir d'un matériau de base.

18. Support de broche de fixation (1') avec douille de guidage (2') correspondante selon une ou plusieurs des revendications 11 à 17 précédentes, le support de broche de fixation (1') comportant une face frontale supérieure (14') avec un premier angle (W1') par rapport à l'axe longitudinal, et la douille de guidage (2') comportant une face frontale inférieure (24') qui est formée comme un épaulement entre la portion d'adaptateur intérieur (22') et le canal de guidage (21') avec un second angle (W2') par rapport à l'axe longitudinal de douille de guidage, la face frontale supérieure (14') du support de broche de fixation (1') et la face frontale (24') de la douille de guidage (2') étant formées l'une par rapport à l'autre, de telle sorte qu'elles sont en appui l'une sur l'autre lorsque la douille de guidage (2') et le support de broche de fixation (1') sont emboîtés l'un sur l'autre et forment une butée prédéfinie l'une par rapport à l'autre.

19. Support de broche de fixation (1') avec douille de guidage (2') correspondante selon la revendication 18, le premier angle et le second angle par rapport à l'axe longitudinal et par rapport à l'axe longitudinal de douille de guidage étant un angle droit ou un angle dans une plage de 60 à 90° ou de 30 à 60°.

20. Support de broche de fixation (1') avec douille de guidage (2') correspondante selon une ou plusieurs des revendications 11 à 19 précédentes, le support de broche de fixation (1') et la douille de guidage (2') étant formés, lorsqu'ils sont emboîtés l'un sur l'autre, de manière à venir en contact exclusivement au niveau des zones de la portion de guidage (11') et de la portion d'adaptateur intérieur (22').

21. Support de broche de fixation (1') avec douille de guidage (2') correspondante selon une ou plusieurs des revendications 11 à 20 précédentes, la section de la portion de guidage (11') et la section d'adaptateur intérieur étant formées autour de l'axe longitudinal et de l'axe longitudinal de douille de guidage avec une forme carrée, hexagonale, ovale, en étoile ou polygonale, afin d'entraîner un blocage en rotation entre le support de broche de fixation (1') et la douille de guidage (2').

22. Support de broche de fixation (1') avec douille de guidage (2') correspondante selon la revendication 21, la section de la portion de guidage (11') et la section d'adaptateur intérieur étant formées avec des coins arrondis autour de l'axe longitudinal et de l'axe de longitudinal de douille de guidage.

23. Procédé pour réaliser un trou dans un support de broche de fixation (1) qui peut être intégré dans une prothèse dentaire (4), comportant les étapes suivantes consistant à :
a) fournir le support de broche de fixation (1) qui est formé pour pouvoir être intégré dans la prothèse dentaire (4) et servir à recevoir une broche de fixation (3) correspondante après une étape de finition facultative, laquelle broche de fixation peut être déplacée dans la bouche d'un patient à travers le support de broche de fixation (1) dans la mâchoire, afin de fixer la prothèse dentaire (4) à la mâchoire, le support de broche de fixation (1) comportant une portion de base (12) et une portion d'adaptateur extérieur (11), et la portion d'adaptateur extérieur (11) s'étendant vers l'extérieur en s'éloignant la mâchoire le long d'un axe longitudinal avec une section d'adaptateur extérieur et une longueur d'adaptateur extérieur,
b) fournir une douille de guidage (2) formée le long d'un axe longitudinal de douille de guidage comme une pièce longitudinale analogue à une douille avec un canal de guidage intérieur (21) qui est ouvert vers l'extérieur des deux côtés et comporte, à une première extrémité (20), le long de l'axe longitudinal de douille de guidage, une portion intérieure d'adaptateur intérieur en forme de cuvette (22) qui est formée en correspondance avec la portion d'adaptateur extérieur (11) de manière à pouvoir être emboîtée,
c) intégrer le au moins un support de fixation de broche (1) dans la prothèse dentaire (4),
d) emboîter la douille de guidage (2) sur le support de broche de fixation (1) jusqu'à une butée prédéfinie entre la douille de guidage (2) et le support de broche de fixation (1),
e) insérer facultativement un foret à travers le canal de guidage intérieur (21) de la douille de guidage (2) et percer un alésage de guidage à travers le support de broche de fixation (1) en tant qu'étape de finition, afin de permettre un passage ultérieur de la broche de fixation (3) à travers l'alésage de guidage,
f) après le perçage de l'alésage de guidage, retirer la douille de guidage (2) du support de broche de fixation (1),
g) après un ajustement de la prothèse dentaire (4) et un retrait de la bouche du patient : retirer au moins la portion d'adaptateur extérieur (12) du support de broche de fixation (1) qui fait latéralement saillie vers l'extérieur.

24. Procédé pour réaliser un trou dans un support de broche de fixation (1) intégré dans une prothèse dentaire (4), comportant les étapes suivantes consistant à :
a) fabriquer la prothèse dentaire (4) avec le support de broche de fixation (1) moulé ou fraisé dans celle-ci, qui est formé de manière à servir, après une étape de finition, à recevoir une broche de fixation (3) correspondante, laquelle broche de fixation peut être déplacée dans la bouche d'un patient à travers le support de broche de fixation (1) dans la mâchoire, afin de fixer la prothèse dentaire (4) à la mâchoire, le support de broche de fixation (1) comportant une portion de base (12) et une portion d'adaptateur extérieur (11), et la portion d'adaptateur extérieur (11) s'étendant vers l'extérieur en s'éloignant de la mâchoire le long d'un axe longitudinal avec une section d'adaptateur extérieur et une longueur d'adaptateur extérieur,
b) fournir une douille de guidage (2) formée le long d'un axe longitudinal de douille de guidage comme une pièce longitudinale analogue à une douille avec un canal de guidage intérieur (21) qui est ouvert vers l'extérieur des deux côtés et comporte, à une première extrémité (20), le long de l'axe longitudinal de douille de guidage, une portion intérieure d'adaptateur intérieur en forme de cuvette (22) qui est formée en correspondance avec la portion d'adaptateur extérieur (11) de manière à pouvoir être emboîtée,
c) emboîter la douille de guidage (2) sur le support de broche de fixation (1) jusqu'à une butée prédéfinie entre la douille de guidage (2) respective et le support de broche de fixation (1),
d) insérer facultativement un foret à travers le canal de guidage intérieur (21) de la douille de guidage (2) et percer un alésage de guidage à travers le support de broche de fixation (1) en tant qu'étape de finition, afin de permettre un passage ultérieur de la broche de fixation (3) à travers l'alésage de guidage,
e) après le perçage de l'alésage de guidage, retirer la douille de guidage (2) du support de broche de fixation (1),
f) après un ajustement de la prothèse dentaire (4) et un retrait de la bouche du patient : retirer au moins la portion d'adaptateur extérieur (12) du support de broche de fixation (1) qui fait latéralement saillie vers l'extérieur.

25. Procédé pour réaliser un trou dans un support de broche de fixation (1') qui peut être intégré dans une prothèse dentaire (4'), comportant les étapes suivantes consistant à :
a) fournir le support de broche de fixation (1') qui est formé pour pouvoir être intégré dans la prothèse dentaire (4') et servir à recevoir une broche de fixation (3) correspondante qui peut être déplacée dans la bouche d'un patient à travers le support de broche de fixation (1') dans la mâchoire, afin de fixer la prothèse dentaire (4') à la mâchoire, le support de broche de fixation (1') comportant une portion de base (12') et une portion de guidage (11'), et la portion de guidage (11') s'étendant vers l'extérieur en s'éloignant de la mâchoire le long de son axe longitudinal avec une surface de guidage (11a') et avec une longueur de portion de guidage le long de l'axe longitudinal,
b) fournir une douille de guidage (2') qui est formée le long d'un axe longitudinal de douille de guidage comme une pièce longitudinale analogue à une douille avec un canal de guidage intérieur (21') qui est ouvert vers l'extérieur des deux côtés et comporte, le long de l'axe longitudinal de douille de guidage, une portion intérieure d'adaptateur intérieur en forme de cuvette (22') qui est formée en correspondance avec la portion de guidage (11') pour pouvoir être emboîtée, afin de relier la portion de guidage (11') et la douille de guidage (2') de manière bloquée en rotation,
c) intégrer le au moins un support de fixation de broche (1') dans la prothèse dentaire (4'),
d) emboîter la douille de guidage (2') sur le support de broche de fixation (1') jusqu'à une butée prédéfinie entre la douille de guidage (2') et le support de broche de fixation (1'),
e) insérer facultativement un foret à travers le canal de guidage intérieur (21') de la douille de guidage (2') et percer un alésage de guidage à travers le support de broche de fixation (1') afin de permettre un passage ultérieur de la broche de fixation (3) à travers l'alésage de guidage,
f) après le perçage de l'alésage de guidage, retirer la douille de guidage (2') du support de broche de fixation (1'),
g) après un ajustement de la prothèse dentaire (4) et un retrait de la bouche du patient : retirer au moins la portion de guidage (11') du support de broche de fixation (1') qui fait latéralement saillie vers l'extérieur.

26. Procédé pour réaliser un trou dans un support de broche de fixation (1') intégré dans une prothèse dentaire (4), comportant les étapes suivantes consistant à :
a) fournir la prothèse dentaire (4) avec le support de fixation de broche (1') moulé ou fraisé dans celle-ci, qui est formé pour servir à recevoir une broche de fixation (3) correspondante qui peut être déplacée dans la bouche d'un patient à travers le support de broche de fixation (1') dans la mâchoire, afin de fixer la prothèse dentaire (4) à la mâchoire, le support de broche de fixation (1') comportant une portion de base (12') et une portion de guidage (11'), et la portion de guidage (11') s'étendant vers l'extérieur en s'éloignant de la mâchoire le long de son axe longitudinal avec une surface de guidage (11a') et avec une longueur de portion de guidage le long de l'axe longitudinal,
b) fournir une douille de guidage (2) qui est formée le long d'un axe longitudinal de douille de guidage comme une pièce longitudinale analogue à une douille avec un canal de guidage intérieur (21) qui est ouvert vers l'extérieur des deux côtés et comporte le long de l'axe longitudinal de douille de guidage, une portion intérieure d'adaptateur intérieur en forme de cuvette (22') qui est formée en correspondance avec la portion d'adaptateur extérieur (11') de manière à pouvoir être emboîtée, afin de relier la portion de guidage (11') et la douille de guidage (2') de manière bloquée en rotation,
c) emboîter la douille de guidage (2') sur le support de broche de fixation (1') jusqu'à une butée prédéfinie entre la douille de guidage (2') et le support de broche de fixation (1'),
d) insérer facultativement un foret à travers le canal de guidage intérieur (21') de la douille de guidage (2') et percer un alésage de guidage à travers le support de broche de fixation (1'), afin de permettre un passage ultérieur de la broche de fixation (3) à travers l'alésage de guidage,
e) après le perçage de l'alésage de guidage, retirer la douille de guidage (2') du support de broche de fixation (1'),
f) après un ajustement de la prothèse dentaire (4) et un retrait de la bouche du patient : retirer au moins la portion de guidage (11') du support de broche de fixation (1') qui fait latéralement saillie vers l'extérieur.
